# EUROPÄISCHE PATENTSCHRIFT

(11) **EP 3 795 332 B1**
(45) Veröffentlichungstag und Bekanntmachung des Hinweises auf die Patenterteilung: **04.09.2024**
(21) Anmeldenummer: 20183468.6
(22) Anmeldetag: 01.07.2020
(51) Int. Cl.: B29C 55/12, B29C 55/20

(54) **BELÜFTUNGSMODUL SOWIE ZUGEHÖRIGE RECKANLAGE**
VENTILATION MODULE AND ASSOCIATED STRETCHING SYSTEM
MODULE D'AÉRATION AINSI QU'INSTALLATION DE TRACTION DU FIL ASSOCIÉE

(30) Priorität: 01.08.2019 DE 102019120794
(43) Veröffentlichungstag der Anmeldung: 24.03.2021
(73) Patentinhaber: Brückner Maschinenbau GmbH, 83313 Siegsdorf (DE)
(72) Erfinder: Maetze, Michael, 83364 Teisendorf (DE); Höglauer, Christoph, 83329 Waging am See (DE)
(74) Vertreter: Flach Bauer & Partner Patentanwälte mbB

(56) Entgegenhaltungen:
- EP-A1- 2 692 508
- EP-B1- 2 692 508
- CN-U- 203 718 818
- JP-A- 2007 320 276

## Beschreibung

Die Erfindung betrifft ein Belüftungsmodul insbesondere für Reckanlagen für Kunststofffolien nach dem Oberbegriff des Patentanspruchs 1 sowie eine Reckanlage mit einem derartigen Belüftungsmodul.

Belüftungsmodule werden unter anderem auch bei der Herstellung von Kunststofffolien verwendet. Sie dienen zum Aufheizen, zum Erwärmen oder zum Abkühlen von bahnförmigen Materialien, insbesondere einer zu reckenden Kunststofffolie. Die Belüftungsdüse ist dabei häufig quer, d.h. in der Regel senkrecht zur Abflussrichtung der Materialbahn und damit quer zur Bahnlauflängsrichtung ober- und/oder unterhalb der Materialbahn angeordnet. Werden derartige Belüftungsdüsen bei Folienreckanlagen eingesetzt, kann es sich bei der Folienreckanlage um eine monoaxiale Längs-, eine monoaxiale Quer- oder eine sequentielle oder simultane Längs- und Querreckanlage handeln.

Die Gleichmäßigkeit des Ausströmens und die Gleichmäßigkeit der Temperaturverteilung des ausströmenden Luftstroms ist insbesondere für den Folienreckprozess besonders wichtig, da eine ungleichmäßige Erwärmung einer Kunststofffolie während der Verarbeitung negative Auswirkungen auf das Dickenprofil sowie die Struktur des Kunststofffilms und damit auf seine Qualität und Güte haben kann. Geringfügige Wärmebereiche werden beispielsweise stärker gereckt, wodurch sie dünner ausfallen können, als beispielsweise kältere Kunststofffolienbereiche. Besonders entscheidend ist dabei die gleichmäßige Belüftung bei der Herstellung von sehr dünnen Kunststofffilmen und -folien.

Grundsätzlich ist man zwar bestrebt, die Belüftungsdüsen so nahe wie möglich an die Kunststofffolienbahn heranzuführen, damit der Wärmeübergang möglichst gut ist. In der Praxis wird die Möglichkeit allerdings durch das Transportsystem begrenzt, weil die üblicherweise auf zwei geschlossen umlaufenden Bahnen geführten Kluppen schon eine gewisse Bauhöhe aufweisen und zudem in Regel in sogenannten Transportsystemkanälen geführt werden, über die sie über eine filmseitige schlitzseitige Öffnung überstehen und den Rand des zu reckenden und in Abzugsrichtung zu transportierenden Kunststofffilmes festhalten.

Aus dem Stand der Technik sind unterschiedliche Belüftungsmodule bekannt. Derartige Belüftungsmodule werden häufig auch als Belüftungsdüsen bezeichnet. Aus der DE 196 23 471 C1 ist eine Belüftungsdüse bekannt, die in Form einer Lochdüse aufgebaut ist. Eine Vielzahl von in Reihe angeordneter Löcher, die sowohl in Abzugsrichtung als auch quer zur Abzugsrichtung versetzt sind, wird von einem Luftvolumen durchsetzt, wobei dieser der Kunststofffolienbahn über ein Mehrkammersystem zugeführt wird.

Dadurch lassen sich zum Teil sehr gleichmäßige Luftausblasgeschwindigkeiten über die gesamte Arbeitsbreite der bewegten Materialbahn realisieren. Dadurch ist der Wärmeübergang über die Arbeitsbreite sehr konstant. Auch die Luftausblastemperatur am Düsenkasten selbst kann über die Arbeitsbreite sehr konstant gehalten werden. Zwischen den einzelnen Düsenkästen wird dabei in der Regel wieder zurückgesaugt. Allerdings kann es aufgrund der großen Abstände zwischen den Düsen und der Kunststofffilm-Ebene zu sehr ungleichmäßigen Luftströmungen vor allem im Bereich der Filmebene kommen, wodurch eine sehr ungleichmäßige Temperaturverteilung verursacht wird. Zudem kann es an den Filmrändern, also insbesondere an den Kunststofffilmrändern zu Störungen bei der Temperaturverteilung kommen, da die die Filmränder haltenden kalten Kluppen die Umgebungsluft im Bereich der Ränder abkühlen. Dies führt insbesondere bei schmalen Arbeitsbreiten des Kunststofffilms zu einer sehr ungleichmäßigen Temperaturverteilung der Luft im Bereich der Filmebene.

Diese teilweise nachteiligen Bedingungen haben sich dadurch verbessern lassen, dass Düsenkästen oberhalb und unterhalb der bewegten Materialbahn insbesondere in Form eines Kunststofffilms verwendet werden, die teleskopierbare Düsen und insbesondere teleskopierbare Schlitzdüsen umfassen, worüber die bewegte Materialbahn mit einem Luftstrom beaufschlagt werden kann. Mit anderen Worten können also die Schlitzdüsen über ein gewisses Maß gegenüber dem Düsenkörper oder Düsenkanal in Richtung Materialebene oder davon weg verstellt werden können.

Als weiteres Problem hat sich in der Praxis insbesondere herausgestellt, dass die aktuell verwendeten Belüftungsdüsen und Düsenkästenaufsätze nicht für die in Praxis vorkommenden unterschiedlichen Arbeitsbreiten geeignet sind.

Denn in der Praxis müssen Kunststofffolien mit teils unterschiedlicher Arbeitsbreite hergestellt werden. Dazu werden die die Kluppen tragenden Schienensysteme in ihrem Abstand zueinander entsprechend verstellt. Diese Verstellbewegung kann in der Regel von den verwendeten Düsenkästenaufsätzen oder den Belüftungsdüsen nicht entsprechend nachvollzogen werden. Bei einer größeren geforderten Flexibilität der Arbeitsbreite hat dies zur Folge, dass die Düsenkästenaufsätze in den zugehörigen Belüftungsdüsen ausgewechselt werden müssen. Eine flexible Arbeitsbreite von beispielsweise 50 mm bis 250 mm oder von 250 mm bis 1000 mm ist mit den herkömmlichen Düsenkästenaufsätzen und den zugehörigen Belüftungsdüsen nicht realisierbar. Gleichwohl müssen aber in der Praxis immer wieder derart große unterschiedliche Verstellbereiche eingestellt werden, verbunden mit all den geschilderten Nachteilen.

Zudem ist aus EP 2 692 508 A1 einen Reckofen zum Querrecken einer thermoplastischen Folie bekannt, wobei eine darin vorgesehene Luftblasdüse, erwärmte Luft auf die entlang einer Foliendurchlauffläche laufende Folie bläst.

Von daher ist es Aufgabe der vorliegenden Erfindung ein verbessertes Belüftungsmodul mit zugehörigen Düsen zu schaffen, welches die Nachteile nach dem Stand der Technik ausschließt und insbesondere auch größere Verstellbereiche im Hinblick auf die geforderten unterschiedlich breiten Materialbahnen erlaubt. Unter Materialbahnbreite versteht man letztlich die Arbeitsbreite bzw. auch die Folienbreite. Die entsprechenden Begriffe werden teilweise parallel verwendet. Dabei soll das verbesserte Belüftungsmodul auch eine verbesserte Temperaturverteilung in der Materialbahnebene ermöglichen.

Die Erfindung wird hinsichtlich der erfindungsgemäßen Belüftungsdüse entsprechend den im Anspruch 1 und hinsichtlich einer Kunststofffolienreckanlage entsprechend den im Anspruch 15 angegebenen Merkmalen gelöst. Vorteilhafte Ausgestaltungen der Erfindung sind in den Unteransprüchen angegeben.

Im Rahmen der erfindungsgemäßen Lösung wird eine Reihe überraschender Vorteile realisiert.

So kann sich die erfindungsgemäße Düse beispielsweise über eine komplette Belüftungszone erstrecken, ohne dass Zwischendüsenbereiche vorgesehen sein müssen, in denen zurückgesaugt werden muss.

Die Düse selbst befindet sich etwas weiter oberhalb des die verfahrbaren Kluppen tragenden Transportsystems bzw. des Gehäuses eines Transportsystemkanals. Die Düsenaustrittsöffnungen befinden sich geschlossen im Bereich über der zu verarbeitenden Materialbahn ohne Zwischenräume in Bewegungsrichtung der Materialbahn.

Die Luft- oder Gasrücksaugöffnungen befinden im Bereich zwischen den seitlich am Materialbahnrand angreifenden Kluppen. Zumindest eine Düsenrücksaugöffnung kann dabei so nahe zur bewegten Materialbahn und insbesondere zur bewegten Kunststofffilmbahn liegen, dass der Abstand der eigentlichen Düsenrücksaugöffnung zur Materialbahn geringer ist als der Abstand eines entferntesten Punktes einer Kluppe oder eines Kluppenteils, beispielsweise in Form eines Kluppenhebels bis zur Ebene der Materialbahn. Dadurch ist es möglich, dass der der Materialbahn zugeführte Gas- oder Luftstrom unmittelbar in dem gewünschten und eingestellten Temperaturbereich der entsprechend aufzuheizenden oder zu erwärmenden oder zu kühlenden Materialbahn abgeführt wird, ohne dass es zu Verfälschungen der Temperatur durch die kühlenden Kluppen selbst oder durch unerwünschte Verwirbelungen kommt, die zu starken unerwünschten Temperaturdifferenzen führen können.

Vor allem aber ist es im Rahmen der Erfindung möglich, diese erfindungsgemäßen Vorteile auch unabhängig von der Materialbahnbreite beizubehalten. Mit anderen Worten kann das erfindungsgemäße Belüftungsmodul mit der zugehörigen Düse in der Breite problemlos in weiteren Bereichen verstellt werden, ohne dass die erfindungsgemäßen Vorteile aufgegeben werden müssen.

Dabei ist es unabhängig von der Einstellung in der Breitenrichtung der erfindungsgemäßen Düse möglich, dass die Rücksaugung der ausgeblasenen Luft zielgerichtet zwischen den Kluppen erfolgt und nicht in dem allgemeinen Raum oberhalb der Materialbahn, in welchem auch frische erwärmte oder gekühlte Luft in Richtung Materialbahn zugeführt wird. Dadurch wird automatisch ein Temperaturaustausch zwischen filmumströmender Luft und den kälteren Kluppen oder auch angrenzenden Wänden vermieden.

Zusammenfassend kann also festgehalten werden, dass die Funktion eines Belüftungsmoduls und damit des erfindungsgemäßen Belüftungsmoduls mit Schlitz- oder Lochdüsen insbesondere für einen Ofen mit einer durchlaufenden Waren- oder Materialbahn ist, die entsprechende Waren- oder Materialbahn insbesondere in Form eines zu reckenden Kunststofffolienfilms zu erwärmen, abzukühlen und/oder eine konstante Temperatur im Bereich dieser Waren- oder Materialbahn zu halten, wobei die Waren- oder Materialbahn in ihrer Dicke variieren kann. Dabei ist, wie grundsätzlich bekannt, die Düsenauslassrichtung senkrecht oder schräg zur Waren- oder Materialbahn gerichtet, wobei die Belüftungsdüsen oberhalb und/oder unterhalb der Waren- oder Materialbahn angeordnet sind.

Dabei ist es aber nunmehr im Rahmen der Erfindung möglich, folgende Vorteile zu erzielen:
- Es ist eine flexible Einstellung der Arbeitsbreite der Belüftungsdüse möglich, beispielsweise von 50 mm bis 2000 mm (dadurch wird eine hohe Flexibilität erzielt, ohne dass bei einer Veränderung der Arbeitsbreite ein Umbau notwendig wird);
- die erfindungsgemäße Belüftungsdüse ermöglicht eine optimierte Luftführung und Abschottung des Einflusses der kalten Kluppen und/oder Begrenzungswände;
- es ist im Rahmen der Erfindung eine optimierte Rücksaugung des abzusaugenden Gas- oder Luftstroms möglich;
- mit der erfindungsgemäßen Belüftungsdüse wird eine sehr gute Temperaturverteilung in der Ebene der Materialbahn erzielt, beispielsweise bis 400°C; dies gilt vor allem auch für den Randbereich (was insbesondere bei Simultanreckanlagen sehr wichtig ist, da der Rand mitgereckt werden muss und im Stand der Technik durch die kühlen Kluppen abgekühlt wird, wodurch die Randbereiche beispielsweise einer zu reckenden Kunststofffolie sehr nachteilig beeinflusst werden);
- das erfindungsgemäße Belüftungsmodul ermöglicht eine sehr gute Luftverteilung über die Arbeitsbreite;
- das erfindungsgemäße Belüftungsmodul vermeidet Falschluftströmungen über der im Rahmen der erfindungsgemäßen Lösung vorgesehenen Abdeckung der nicht benötigten Durchström-Löcher;
- es wird eine Verringerung unterschiedlicher Streckverhältnisse beispielsweise bei einer zu reckenden Kunststofffolienbahn vor allem zwischen dem Filmrand und der Filmmitte erzielt, vor allem durch eine gleichmäßigere Temperaturführung und -verteilung; und
- im Rahmen der Erfindung lassen sich gleichmäßigere Materialbahneigenschaften insbesondere im Fall eines Kunststofffolienfilms über die gesamte Arbeitsbreite erzielen, also insbesondere auch bezüglich des E-Moduls, des Schrumpfes oder einer Bruchdehnung im Falle eines Kunststofffolienfilms.

Die Erfindung wird nachfolgend anhand von Ausführungsbeispielen näher erläutert. Dabei zeigen im Einzelnen:
- Figur 1:: eine schematische Draufsicht auf eine Reckanlage, in der eine erfindungsgemäße Belüftungsdüse verwendet wird;
- Figur 2:: eine Querschnittsdarstellung durch eine mögliche Ausführungsform eines Transportsystemkanals mit innenliegender Transport- und Führungsschiene und darauf verfahrbaren Kluppe mit zugehörigem Transportteil und eigentlichem Kluppenteil, welches über eine Öffnung in dem im Querschnitt gezeigten Transportsystemkanalge häuse auf der Filmseite übersteht;
- Figur 3:: eine schematische räumliche Darstellung einesAusschnitts einer Reckanlage, in der die Belüftungsdüse eingesetzt wird;
- Figur 4:: eine schematische Querschnittsdarstellung durch eine nach dem Stand der Technik bekannte Belüftungsanordnung;
- Figur 5a:: eine schematische Querschnittsdarstellung durch eine erfindungsgemäße Belüftungsdüse, wie sie oberhalb einer Materialbahnebene angeordnet ist, wobei das System bezüglich einer Materialbahn mit geringer Materialbahnbreite eingestellt ist;
- Figur 5b:: eine entsprechende Darstellung zu Figur 5a, bei der das gesamte System einschließlich der Belüftungsdüse jedoch bezüglich einer breiten Maerialbahn eingestellt ist;
- Figur 5c:: eine schematische vereinfachte Querschnittsdarstellung durch das erläuterte Ausführungsbeispiel unter Wiedergabe eines zum Film bzw. zur Filmebene oberen Belüftungsmoduls sowie eines unteren Belüftungsmoduls;
- Figur 6a:: ein zu Figuren 5a und 5b leicht abgewandeltes Ausführungsbeispiel in schematischer Querschnittsdarstellung, wenn das gesamte System bezüglich einer geringen oder schmalen Materi albahnbreite eingestellt ist;
- Figur 6b:: eine abweichende Darstellung zu Figur 6a bezüglich des in Figur 6a gezeigten Ausführungsbeispieles, jedoch im Falle einer Einstellung bezüglich einer großen Materialbahnbreite;
- Figur 7:: eine schematische räumliche Darstellung einer anhand von Figuren 6a und 6b beschriebenen Belüftungsdüse;
- Figur 8a:: eine räumliche Darstellung eines Ausschnitts einer Reckanlage mit einer oberhalb der Filmebene und einer unterhalb der Filmebene gezeigten erfindungsgemäßen Belüftungsdüse, wenn das gesamte System einschließlich der beiden Belüftungsdüsen auf eine schmale Filmbandbreite eingestellt ist;
- Figur 8b:: eine entsprechende Darstellung zu Figur 8a, bei der jedoch das gesamte System einschließlich der beiden erfindungsgemäßen Belüftungsdüsen zu einer großen Filmbahnbreite hin verstellt ist.

### Aufbau einer Reckanlage

Ein erfindungsgemäßes Belüftungsmodul wird im Zusammenhang mit einer beispielhaften Reckanlage erläutert, wobei die Reckanlage anhand einer Simultan-Reckanlage primär erläutert wird, obgleich grundsätzlich ein entsprechendes erfindungsgemäßes Belüftungsmodul auch bei anderen bewegten Materialbahnen im Allgemeinen und bei einer Reckanlage im Besonderen eingesetzt werden kann, die beispielsweise nur aus einer monoaxialen Längsreckanlage, einer monoaxialen Querreckanlage oder aber aus einer sequenziellen Längs- und Querreckanlage bestehen kann, bei der eine Materialbahn insbesondere der Kunststofffolienfilm zunächst in Längs- und dann in Querrichtung oder umgekehrt erst in Quer- und dann in Längsrichtung gereckt wird.

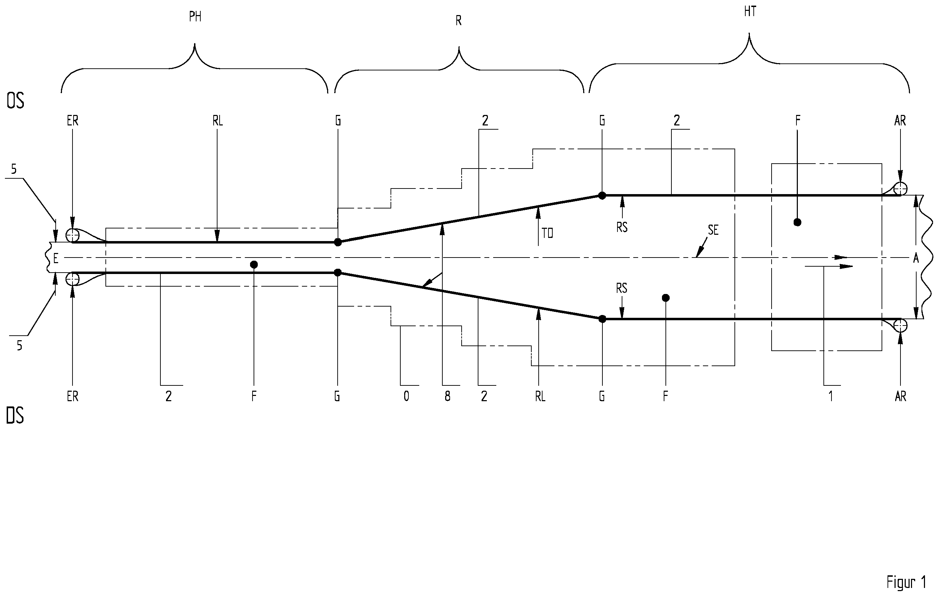

Eine beispielhaft erläuterte Simultan-Reckanlage weist zwei symmetrisch ausgebildete Antriebssysteme auf, die symmetrisch zu einer mittleren, vertikal zur Folienebene verlaufenden Symmetrie-Ebene SE liegen. In Figur 1 sind die beiden symmetrisch zur Symmetrieebene SE in Abzugsrichtung 1 angeordneten Antriebssysteme mit zugehöriger umlaufender Bewegungsbahn eingezeichnet, wobei zwischen den beiden auf geschlossenen Bahnen oder Bewegungsbahnen 2 umlaufenden Antriebssystemen die zu behandelnde, d.h. zu reckende Materialbahn F insbesondere in Form eines Kunststofffilms F längs der Abzugsrichtung 1 hindurch bewegt wird, wozu Kluppen verwendet werden, die den Filmrand ergreifen und den Film durch die Reckanlage hindurchbewegen.

Grundsätzlich wird aus einer Düse oder Extruderdüse die Kunststoff-Schmelze abgegeben, und zwar in der Regel auf eine Kühlwalze, die auch als Chillroll bezeichnet wird. Sobald der Film die Kühlwalze (Chillroll) verlässt, hat sich ein sogenannter "Castfilm" gebildet, der dann üblicherweise in einen Ofen zur Temperierung des Filmes einläuft. Danach wird üblicherweise nicht mehr von einem "Castfilm" sondern nur noch von einem "Film" oder "Kunststofffilm" gesprochen. Am Ende des gesamten Reckprozesses und in der Regel nach Durchführung einer Relaxationsphase, wenn also der Film vollständig verstreckt ist und aus dem Ofen kommt und auf einem Wickler aufgewickelt wird, wird häufig nur noch von "Folie" gesprochen.

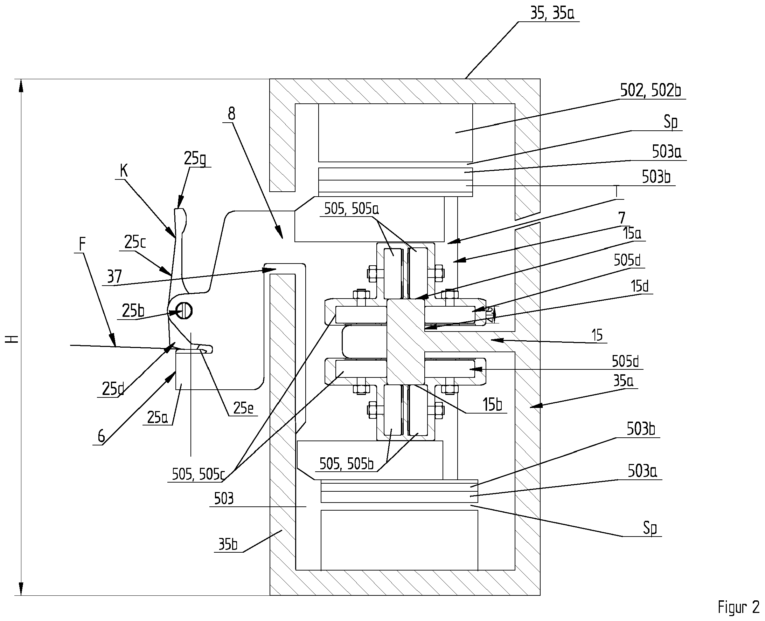

Eine zu verstreckende Folie F läuft in einem Einlaufbereich ER in die Reckanlage ein, wobei dann die beiden Materialbahn- oder Filmränder 5 von auf den geschlossenen Bahnen 2 umlaufenden Kluppen K ergriffen werden, wobei Kluppen in der Querschnittsdarstellung beispielsweise anhand von Figur 2 gezeigt sind. Die Kluppen K ergreifen also die beiden Materialbahnränder 8, um die Materialbahn oder den Film F darüber zu ergreifen und einzuklemmen, und zwar auf der sogenannten Operator-Seite (OS=operator side) sowie der antriebsseitigen Drive-Seite (DS=drive side). Die Folie F wird dann z.B. in einer nachfolgenden Vorheizzone PH erwärmt und nachfolgend einer Reckzone R zugeführt, um hier simultan in Längs- und Querrichtung verstreckt zu werden. Dabei werden die Kluppen gegenüber der Antriebsgeschwindigkeit v1 im Einlaufbereich auf eine höhere Reckgeschwindigkeit v2 beschleunigt, um den Kunststofffilm gleichzeitig in Längs-und Querrichtung zu recken. Dabei werden die Kluppen auf divergierenden Bahnabschnitten voneinander wegbewegt, wobei der Abstand x zwischen zwei aufeinanderfolgenden Kluppen wie aber auch der Abstand y zwischen den Kluppen zunimmt, wie sie auf den zugehörigen Bahnen auf der Drive-Side zum einen und auf der Operator-Side zum anderen verfahren werden, also der Abstand y zwischen den gegenüberliegenden Seitenrändern des Kunststofffilms zunimmt. Mittels Gelenken G kann der Verlauf der Führungsbahn 2 vor allem im Bereich der Reckzone entsprechend den gewünschten und optimalen Vorgaben eingestellt werden. Die Führungsschienen können ferner durch einen Ofen O verlaufen.

Die Abstände x und y werden dabei im Verhältnis der gewünschten Reckverhältnisse in Längs- und Querrichtung vergrößert. Am Ende des zweiten Schritts hat die Folie eine Geschwindigkeit v2, die über der Geschwindigkeit v1 liegt.

Anschließend durchläuft der verstreckte Film F in der Regel in einem dritten Schritt zumindest eine Wärmebehandlungszone HT, d.h. eine sogenannte Annealingzone, in der eine Relaxierung erfolgen kann. Dazu wird die Geschwindigkeit v2 verlangsamt und so der Abstand x von jeweils aufeinander folgenden Kluppen verringert. Gleichzeitig kann der Abstand y von gegenüberliegenden Kluppen verringert werden. Die Geschwindigkeiten werden dabei im Ausmaß der gewünschten Relaxierung verringert. Während der Wärmebehandlung wird der Film vorteilhafterweise einer Entspannung (Relaxierung) unterzogen. Diese Relaxierung kann in Längsrichtung, in Querrichtung oder in beiden Richtungen erfolgen. Bevorzugt wird sie sowohl in Längs- als auch in Querrichtung vorgenommen. Bevorzugt ist daher ein Verfahren, das dadurch gekennzeichnet ist, dass nach dem simultanen Recken eine Relaxierung in Längsrichtung oder in Querrichtung oder in beiden Richtungen vorgenommen wird. Dies bedeutet, dass dem Film erlaubt wird, kontrolliert zu schrumpfen. Der Umfang der Relaxierung beträgt üblicherweise zwischen 2 % und 12 %, bevorzugt zwischen 4 % und 8 % und ganz besonders bevorzugt 5 % bis 7 %, jeweils von der Länge und/oder der Breite der Film.

Am Auslaufende AR der Reckanlage, d.h. am Ende der sogenannten Auslaufzone A, wird der Film durch geeignete Mittel ausgekluppt und verlässt dann die Simultan-Reckanlage.

### Aufbau eines Schienensystems und der zugehörigen Kluppen

Nachfolgend wird auf Figur 2 Bezug genommen, in welcher eine Querschnittsdarstellung einer linearmotorgetriebenen Simultan-Reckanlage mit einem zugehörigen Kluppen- und Transportteil beispielhaft gezeigt ist. Allerdings sind auch andere Ausführungsformen möglich, um die erfindungsgemäße Folie herzustellen. Es wird insoweit auf noch weitere bekannte Lösungen verwiesen.

Aus Figur 2 ist also eine Kluppen-Transporteinheit T zu ersehen, welche ein sogenanntes Kluppenteil 6 und das sogenannte Transportteil 7 umfasst. Das Kluppenteil 6 ist mit dem Transportteil 7 über eine sogenannte Brücke 8 verbunden. Je nach Sichtweise kann die Kluppen-Brücke 8 zum Transport- oder zum Kluppenteil hinzugerechnet werden.

Das Kluppenteil 6 umfasst wie üblich einen um eine Kluppenachse 25b verschwenkbaren Kluppenhebel 25c, der teilweise auch als Messerklappe 25c bezeichnet wird. Im Falle einer Folienreckanlage wird ein Film F zwischen der Greiffläche 25d und einem Kluppentisch 25e fixiert, d.h. eingeklemmt und festgehalten.

Ein birnenförmig oder U-förmig geformtes Schließteil 25g sorgt für das Öffnen und Schließen des Kluppenhebels und damit für das Einklemmen bzw. Freilassen des Films zusammen mit einer entsprechenden nicht dargestellten Einrichtung nach dem Stand der Technik. Das Öffnen und Schließen kann je nach Ausführung des Schließteils rein mechanisch oder magnetisch erfolgen.

Der eigentliche Aufbau der linearmotorgetriebenen Simultan-Reckanlage mit dem entsprechenden Linearmotorantrieb ist beispielsweise aus der EP 0 455 632 B1 oder der DE 44 36 676 C2 als bekannt zu entnehmen, auf deren Offenbarungsgehalt in vollem Umfang Bezug genommen wird. Die anhand von Figur 2 im Querschnitt gezeigte Darstellung gibt die Führungs- und Tragschiene 15 wieder.

Im erläuterten Ausführungsbeispiel laufen auf jeder Lauffläche jeweils zumindest ein Paar von Laufrollen 505, nämlich ein oben liegendes Laufrollenpaar 505a, die um eine Horizontalachse drehen und auf einer nach oben weisenden Lauffläche 15a abrollen. Über dieses Laufrollenpaar wird das gesamte Gewicht des zugehörigen Transportteiles mit dem damit verbundenen Kluppenteil aufgenommen und abgestützt.

Ein auf der unteren Lauffläche 15b abrollendes Rollenpaar 505b dient lediglich der Lauf-Sicherheit.

Schließlich ist auch noch auf der Kluppenseite ein Rollenpaar 505c und gegenüberliegend ein Rollenpaar 505d vorgesehen, das an den betreffenden vertikalen Laufflächen 15c und 15d abrollt. Darüber ist das Transportteil 7 geführt und gelagert. Die entsprechende Führungsschiene 15 ist über mehrere in Längsrichtung der Führungsschiene versetzt liegende Horizontalträger in Abständen gehalten, die jeweils in dem kluppenabseitig liegenden Freiraum 401 zwischen dem oberen und unteren Laufrad 505d verlaufen und mit der Führungsschiene fest verbunden sind. Allerdings wird angemerkt, dass die Erläuterung der Schienenanordnung und der darauf ablaufenden Rollen nur beispielhaft ist. Das Schienensystem und Abstützelemente der Rollen können auch völlig anders ausgebildet sein. So könnten auch Gleitelemente anstelle der Rollen verwendet werden und die Führungsschiene selbst könnte, wie im Stand der Technik bekannt ist, auch völlig unterschiedlich ausgebildet sein.

Das entsprechende Transportteil wird über Linearmotoren angetrieben, die ortsfeste Primärteile 502 und mit den Kluppen-Transportteilen T mitbewegliche Sekundärteile 503 umfassen. Mit anderen Worten werden längs der Führungsschiene 15, die hier auch als Transportschiene 15 gleichzeitig dient (z.B. Monorail), die Kluppen, also die Kluppe 6, mit den Transportteilen 7 mittels der Primärteile 502 und der Sekundärteile 503 längs verfahren und bewegt.

Die erwähnten Primärteile 502 sind parallel zur Führungs- und Tragschiene 15 angebracht. Die Sekundärteile 503 bestehen aus den erwähnten Permanentmagneten 503a, die in einem jeweiligen Haltekäfig 503b befestigt sind, der wiederum an dem Kluppenkörper 6 gehalten ist.

Wie aus Figur 2 zu ersehen ist, ist zwischen dem Primär- und Sekundärteil 502, 503 ein (geringer) Abstandsspalt Sp ausgebildet, über welchen hinweg die vom Primärteil erzeugten elektromagnetischen Wellen auf den Permanentmagneten 503a am Transportteil einwirken und dadurch das Transportteil in Vorschubrichtung bewegen.

Abweichend von den geschilderten Rollen, worüber die Kluppen-Transportteile T längs des Verfahrweges bewegt werden, könnte grundsätzlich auch anstelle einer Rollenlagerung eine Gleitlagerung unter Verwendung entsprechender Gleitelemente vorgesehen sein. Auch kombinierte Systeme mit Rollen- und Gleitlagerung sind möglich. Auch hier wird auf bekannte Lösungen verwiesen.

Das Recken der Folie erfolgt also z.B. mit einer derartigen linearmotorangetriebenen Simultan-Reckanlage. Abweichend von dem bevorzugt verwendeten Linearmotorantrieb kann auch eine Simultanreckanlage verwendet werden, die mittels eines Pantograph-Systems arbeitet. Es wird insoweit auf bekannte Lösungen verwiesen.

Die erfindungsgemäße Lösung ist wie erwähnt aber nicht nur bei einer Simultanreckanlage realisierbar, sondern auch bei einer reinen Längs- oder reinen Querreckanlage oder bei einer sequenziellen Längs- und Querreckanlage, bei der der Film erst in Längs- und dann in Querrichtung oder umgekehrt erst in Quer- und dann in Längsrichtung gereckt wird. In diesem Falle würde Figur 1 lediglich die Querreckstufe wiedergeben. Nur der Vollständigkeit halber wird erwähnt, dass die erfindungsgemäße Lösung nicht nur bei einer Reckanlage möglich ist, sondern auch dann, wenn beispielsweise der Film ohne Reckung parallel verfahren wird, insbesondere parallel durch einen Ofen hindurch geführt wird.

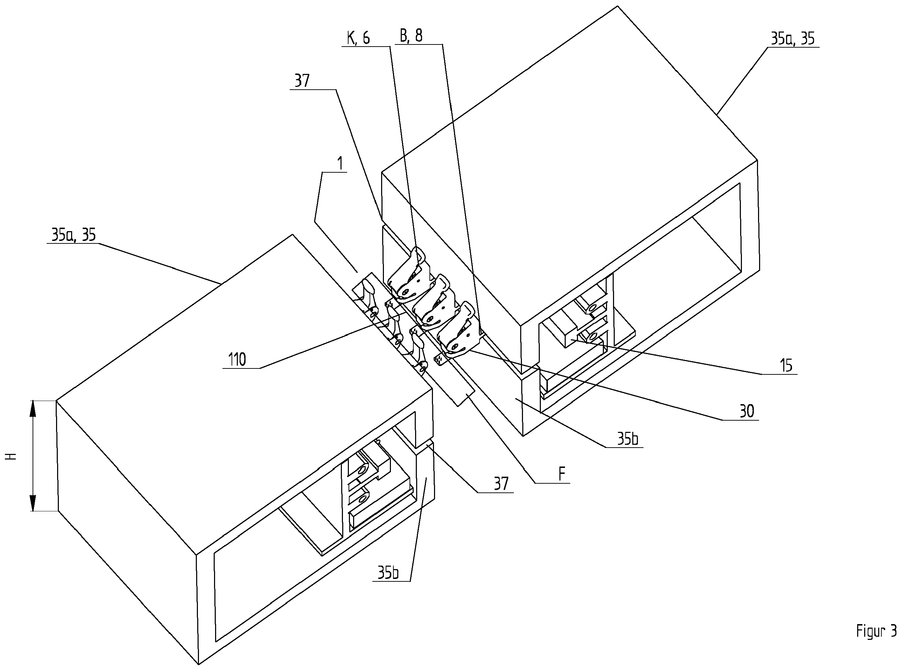

Nachfolgend wird auf Figur 3 Bezug genommen, die in räumlicher Ansicht einen Ausschnitt aus einer entsprechenden Reckanlage zeigt, und zwar einen vorlaufenden Abschnitt, in welchem ein Kunststofffolienfilm noch nicht in Querrichtung oder noch nicht mittels einer Simultanreckanlage oder einer sequenziellen Reckanlage in Querrichtung gereckt ist. Von daher weist der Film oder Kunststofffilm F noch eine relativ schmale Breite auf.

In dem gezeigten Ausschnitt der Reckanlage sind die beiden seitlichen Transportsystemkanäle 35 gezeigt, in denen die anhand von Figur 2 wiedergegebenen Transportteile 7 auf der entsprechenden Führungs- und/oder Tragschiene 15 verfahrbar sind und bei der gezeigten Konstruktion über ein Brückenteil B das eigentliche Kluppenteil 6 tragen. Insoweit wird nachfolgend bezüglich des Kluppenteils 6 mit dem zugehörigen Transportteil auch kurz von verfahrbaren Kluppen K gesprochen.

Bei der Darstellung gemäß Figur 3 sind die Transportsystemkanäle 35 gehäuseartig ausgebildet. Dazu sind die beiden Transportsystemkanalgehäuse 35a in Figur 3 gezeigt, die links und rechts von der bewegten Materialbahn F angeordnet sind. Gemäß Figur 3 weisen dazu die Transportsystemkanalgehäuse 35a jeweils eine Deckseite, eine Bodenseite, entfernt liegende Außenseiten und eine der bewegten Materialbahn F zugewandt liegenden Innenseite 35b auf, die nachfolgend teilweise auch als Transportsystem-Abschirmwand 35b bezeichnet wird.

Die entsprechenden Transportsystemkanäle 35 mit dem zugehörigen Transportsystemkanalgehäuse 35a ist auch aus Figur 2 in der Querschnittsdarstellung zu entnehmen, wobei bei diesem Ausführungsbeispiel gemäß Figur 2 in dem Transportkanalgehäuse 35a nur die Führungs- und Transportschiene 15 für die Vorwärtsbewegung der Kluppen K in Abzugsrichtung 1 untergebracht sind und der Raum für die Kabelkanäle und Klemmboxen zur Vereinfachung weggelassen wurde. Das Schienensystem für den Rückführweg ist außerhalb dieser Kanalgehäuseanordnung 35a in einem separaten Kanal vorgesehen bzw. untergebracht.

Filmseitig weist jeder der beiden Transportsystemkanäle 35 eine spaltenförmige Öffnung 37 auf, über die das als Brücke B bezeichnete Verbindungsteil 8 zwischen dem eigentlichen Kluppenteil 6 und dem Transportteil 7 in Richtung Film hindurchragt und übersteht. In Figur 3 sind die Kluppen K in geschlossenem Zustand gezeigt, in der sie die gegenüberliegenden Ränder 5 eines Filmes F ergreifen und in Abzugsrichtung 1 durch die Anlage hindurch bewegt bzw. angetrieben werden.

### Aufbau eines herkömmlichen Belüftungsmoduls

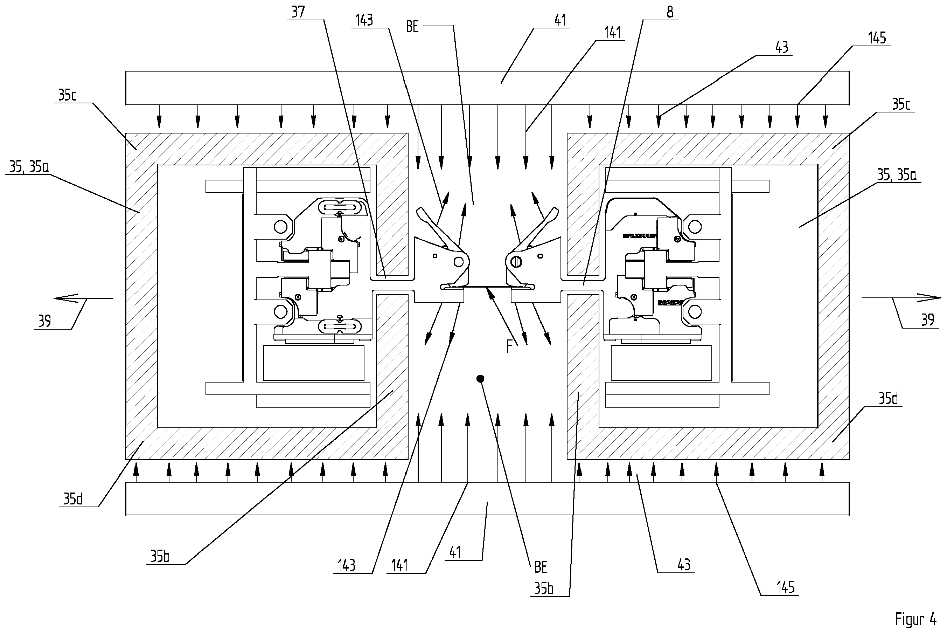

Eine übliche Belüftungseinrichtung nach dem Stand der Technik ist dabei in Figur 4 im Querschnitt wiedergegeben, in der wiederum die beiden seitlichen Transportsystemkanäle 35 dargestellt sind, die das Schienensystem mit dem Transportteil 7 und dem über die Brücke B gehaltenen Kluppenteil 6, die zwischen ihrem Kluppentisch und dem unteren Ende des Kluppenhebels einen Film F eingespannt halten.

Die beiden seitlichen Transportsystemkanäle 35 und die Belüftungsdüsen 41 bilden den Belüftungsraum BE.

Um hier eine unterschiedliche Anpassung an unterschiedliche Filmbreiten vornehmen zu können, müssen die beiden Transportsystemkanäle 35 beispielsweise entsprechend der in entgegengesetzten Richtung dargestellten Pfeile 39 voneinander weiter entfernt werden. Dann können Filme mit größerer Filmbreite als in Figur 4 dargestellt verarbeitet werden, weil die in Figur 4 gezeigten, die jeweiligen seitlichen Filmränder erfassenden Kluppen dann entfernter zueinander liegen und einen breiteren Film F dazwischen eingespannt halten und in Abzugsrichtung 1 fortbewegen können.

Um hier also ein Belüftungsmodul bereitzustellen, welches eine unterschiedliche Breiteneinstellung und damit eine unterschiedliche Einstellung des seitlichen Abstandes zwischen den beiden seitlichen Transportsystemkanälen 35 und den zugehörigen verfahrbaren Kluppen K ermöglicht, ist eine entsprechende Belüftungsdüse 41 oberhalb des Films und eine Belüftungsdüse 41 unterhalb des Films angeordnet, d.h. sogar oberhalb und unterhalb der Transportsystemkanäle 35 und damit oberhalb und unterhalb der Transportsystemkanalgehäuse 35c und 35 d.

Dieses System hat aber eine Reihe von Nachteilen, wie dies eingangs erläutert wurde. Denn die Zuführung von z.B. Luft über die Belüftungsdüsen 41 gemäß der Pfeildarstellung 141 in Richtung Film F führt dazu, dass die entsprechend temperierte Luft nicht nur auf die Filmoberfläche trifft, sondern auch auf die demgegenüber kühleren Kluppen K und insbesondere Kluppenteile 6, so dass die temperierte Luft abgekühlt wird. Dies führt zu Instabilitäten der Luftströmungen und vor allem zu einer ungleichmäßigen Temperaturverteilung und damit ungleichmäßigen Erwärmung des Films und vor allem kommt es an den Filmrändern zu einer Störung der Temperaturverteilung, da die kalten Kluppen die Umgebungsluft im Bereich der Ränder 5 abkühlen. Zu den Luftinstabilitäten kommt es auch, weil in dem gleichen Raum, in welcher der Film F fortbewegt wird, nicht nur die temperierte Luft gemäß dem Pfeil 141 zuströmt, sondern auch gemäß den Pfeilen 143 wiederum quasi gegensinnig abströmt, um dann in dem Abstandsraum zwischen den einzelnen Belüftungsdüsen 41 zu den nicht dargestellten oberhalb liegenden Rücksaugkanälen zu strömen.

Ein weiterer Nachteil ist es, das auf Grund der flexibel einstellbaren Filmbreite die Düsenkästen wesentlich breiter gestaltet werden müssen, um auch bei maximaler Filmbreite über den gesamten Querschnitt auszuströmen. Bei kleineren Filmbreiten treffen diese Luftstrahlen 145 dann auf der Oberseite auf die Abdeckung 35c und auf der Unterseite auf die Abdeckung 35d, werden entsprechend umgelenkt in Richtung Belüftungsraum BE und beeinflussen Temperatur- und Luftverteilung auf den Film F.

### Erfindungsgemäßes Belüftungsmodul

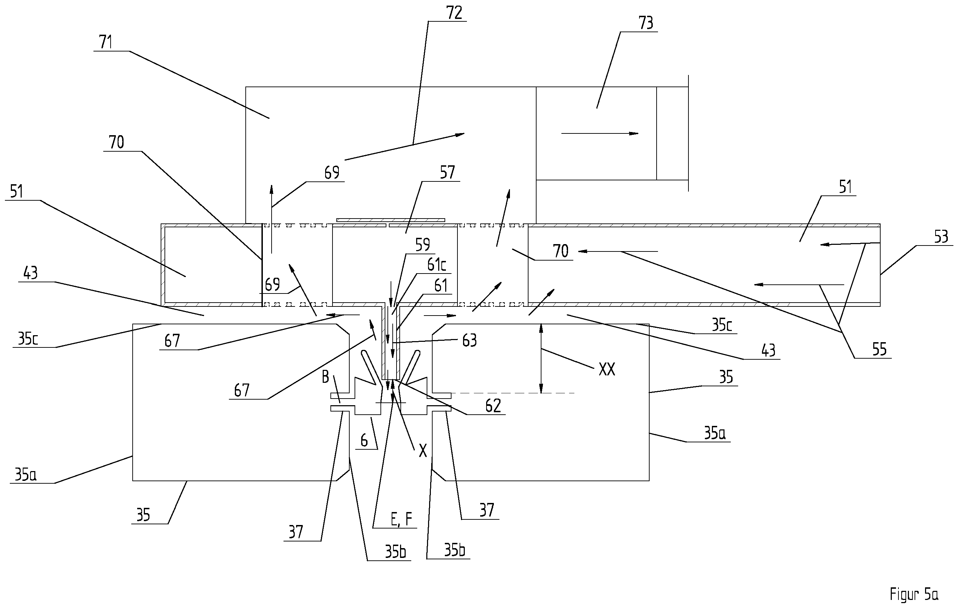

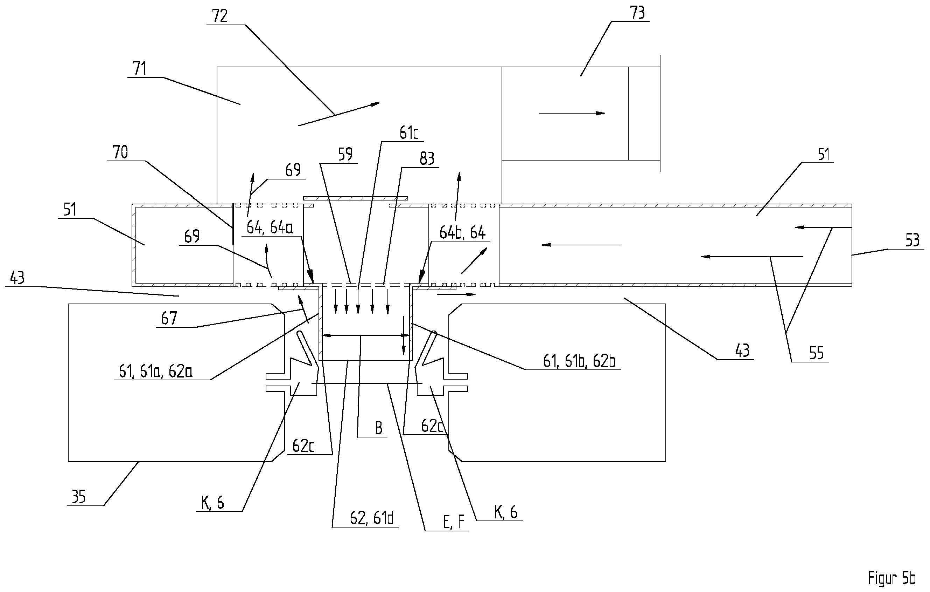

Um diese Nachteile zu verhindern, wird eine erfindungsgemäße Lösung vorgeschlagen, die schematisch anhand eines ersten Ausführungsbeispiels unter Bezugnahme auf Figuren 5a und 5b erläutert wird.

Die Figuren 5a und 5b zeigen jeweils zwei Querschnittsdarstellungen durch ein erfindungsgemäßes oberes Belüftungsmodul, nämlich einen Querschnitt senkrecht durch zwei parallel zueinander verlaufende Transportsystemkanäle 35, die in seitlichem Abstand zueinander angeordnet sind. Dazwischen verläuft der entsprechende, durch die Anlage hindurchzuführende und zu reckende Film F. Die Querschnittsdarstellung ist somit quer und insbesondere senkrecht zu den beiden Führungs- und Transportschienen 15 wiedergegeben, wobei diese Schienen 15 und die eigentlichen Transporteinheiten 7 im Detail nicht weiter dargestellt sind. Es wird insoweit auf die vorausgegangenen Ausführungen und Darstellungen über bekannte Lösungen verwiesen. Gezeigt ist lediglich die spaltförmige Öffnung 37 in dem Transportsystemkanalgehäuse 35a und die über das als Brücke B bezeichnete Verbindungsteil aufeinander zu über die Transportsystemkanäle 35 überstehenden eigentlichen Kluppenteile 6, die im gezeigten Ausführungsbeispiel jeweils einen Film F halten, der in einer Filmebene E eingespannt ist.

Dabei ist in Figur 5a lediglich die Belüftungs- und Rückführeinrichtung gezeigt, also das Belüftungsmodul, welches oberhalb der Filmebene E, d.h. des Films F vorgesehen ist. Spiegelbildlich dazu ist in der Regel eine entsprechende unterhalb des Films F zusätzlich vorgesehene Belüftungs- und Rückführeinrichtung angeordnet.

Bei der Querschnittsdarstellung gemäß Figur 5a sind die zugehörigen Transportsystemkanäle 35 mit den zugehörigen verfahrbaren Kluppen K so eingestellt, dass sie beispielsweise einen schmalen Film F mit verhältnismäßig geringer Filmbreite an dessen Filmrändern 5 halten und durch die Reckanlage in Abzugsrichtung 1 hindurchführen.

In Figur 5b ist die entsprechende Querschnittsdarstellung zu Figur 5a wiedergeben, allerdings in einer Einstellung, bei der die beiden Transportsystemkanäle 35 beispielsweise in ihre maximale und damit entfernteste Lage seitlich voneinander weg verstellt sind, entsprechend auch die Schienen 15, die mitverstellt sind und die Kluppen von daher entfernter zueinander auf den Schienen 15 verfahren werden, um einen sehr viel breiteren Film F an dessen Filmrändern zu erfassen und durch die Reckanlage hindurch in Abzugsrichtung 1 abzuziehen.

Entsprechend diesen unterschiedlichen Einstellungen ist auch das erfindungsgemäße Belüftungsmodul entsprechend unterschiedlich eingestellt, worauf nachfolgend eingegangen wird.

Bei der Darstellung gemäß Figur 5a ist dabei das obere Belüftungsmodul mit einer oberen Belüftungsdüse 51 gezeigt, die eine geeignete, beispielsweise in Figur 5a rechts liegende Belüftungsdüsen-Zuführöffnung 53 aufweist, so dass ein entsprechend temperierter oder je nach Einsatzzweck auch gekühlter Luft- oder Gasstrom, in der Regel Umgebungsluft (die aber auch aus anderen Gasen oder gasförmigen Medien bestehen oder mit anderen gasförmigen Medien versetzt sein kann), entsprechend den Pfeilen 55 zugeführt werden kann.

Im mittleren Bereich der Belüftungsdüse 51 kann z.B. der entsprechende Luft- oder Gasstrom bis in einen mittleren Abschnitt 57 (Belüftungs- oder Belüftungsdüsenkammer 57) eingeblasen werden, der eine Austrittsöffnung 59 aufweist, die in Richtung Film F bevorzugt ausgerichtet ist.

Über einen nachfolgenden Belüftungskanal oder Belüftungsdüsenkanal 61 (der nachfolgend teilweise auch als Belüftungsaustrittskanal 61 bezeichnet wird) kann dann der Gas- oder Luftstrom entsprechend den dortigen Strömungspfeilen 63 in Richtung Film F ausströmen. Mit anderen Worten wird also der Gas- oder Luftstrom dem Belüftungsdüsen- oder Belüftungsaustrittskanal 61 über eine Gasstrom-Eintrittsseite 61c zugeführt, wobei der Gasstrom dann nach Durchströmen des Belüftungsaustrittskanals an seiner Düsenaustrittsöffnung 62 über die dadurch gebildete Gasstromaustrittsseite 61d in Richtung Film F weiterströmen kann.

Die eigentliche Düsenaustrittsöffnung 62 liegt dabei im gezeigten Ausführungsbeispiel im Abstandsbereich der Kluppen K, d.h. im gezeigten Ausführungsbeispiel sogar in einem geringeren Abstand X zur Filmebene E, der kleiner ist als ein Abstand XX zwischen der entferntesten Stelle der Abdeckung 35c und der Filmebene E. In Figur 5a ist dieser Abstand zwischen der Filmebene E und dem zur Filmebene E entferntest liegenden Abschnitt der zugehörigen Abdeckung 35c mit XX bezeichnet.

Dadurch strömt z.B. die temperierte Luft unmittelbar auf den Film F und damit die Filmebene E ohne durch die Masse der Kluppenkörper abgekühlt zu werden, wenn diese vor allem eine zu dem Film zugeführten temperierten Gasstrom abweichende Temperatur aufweisen.

Die dem Film zugeführte Gas- oder Luftströmung kann dann seitlich jeweils zwischen zwei in Abzugsrichtung aufeinander folgende Kluppen abströmen, und zwar in Richtung der Abströmpfeile 67.

Es kann also von der sogenannten Lufteinströmseite einseitig durch die erwähnte Belüftungs-Zuführöffnung 53 oder an den beiden gegenüberliegenden Seiten des Belüftungsmoduls (also beidseitig) ein entsprechender Gasstrom dem Belüftungsmodul zugeführt werden (beheizt oder unbeheizt und vorzugsweise aus Luft bestehend), von wo aus der Gas- oder Luftstrom dann gleichmäßig in die erwähnte Düsenkammer 57 gelangt. Von dort kann der Gas- oder Luftstrom gleichmäßig über die gesamte Düsenbreite und -länge, d.h. über den gesamten zur Verfügung stehenden Querschnitt der sogenannten Austrittsöffnungen 59 von der Belüftungskammer 57 in den eigentlichen Belüftungsaustrittskanal 61 einströmen. Die sogenannten Austrittsöffnungen 59 bilden somit die Düseneintrittsöffnungen 59 für den Belüftungsaustrittskanal 61. Die Austrittsöffnung 59 der Belüftungskammer 57 ist - worauf später noch eingegangen wird - so gestaltet, dass sie eine Vielzahl von Schlitzen und/oder Löchern aufweist. Über den erwähnten Belüftungsaustrittskanal 61 kann dann der Gas- oder Luftstrom bis zur Düsenaustrittsöffnung 62 weiterströmen, um dort in Richtung Film F auszutreten, und zwar in Höhe der Kluppen K bzw. der Kluppenteile 6. Diese Ausströmbewegung kann also mehr oder weniger unbehindert zwischen den Kluppenkörper in Richtung Film F und Filmebene E erfolgen. Vom Film F reflektiert wird der Gas- oder Luftstrom dann zwischen den Kluppen (die einen gewissen Abstand zueinander in Bewegungsrichtung, d.h. Abzugsrichtung haben) über den Filmrand in Richtung Rücksaugdüse abgesaugt, worauf später noch eingegangen wird.

Dabei ist im gezeigten Ausführungsbeispiel wiederum ein Abstandsraum 43 zwischen der Ober- oder Deckseite 35c der Transportsystemkanäle 35 (also der zur Filmebene F jeweils entfernt liegenden Seite) und der Materialbahn- oder Filmseite 51a der Belüftungsdüse 51 vorgesehen, so dass der rückgeführte Gasstrom über die Strömrichtung entsprechend der Pfeildarstellung 67 dann entsprechend in den Abstandsraum 43 umgelegt wird, um dann in entsprechende Rücksaugkanäle 70 einströmen zu können. Diese Rücksaugkanäle 70 werden also von den rückgeführten Luft- oder Gasströmen durchströmt und können bis zu einem oberen Abschnitt der im gezeigten Ausführungsbeispiel nach Figur 5a oberen Rücksaugdüse 71 oder -kammer gelangen.

Von dort kann der rückgeführte Gas- oder Luftstrom weiter gemäß den entsprechend wiedergegebenen Pfeilen 72 beispielsweise zu einer Heizeinrichtung 73 geführt werden (wenn eine Temperierung, also Erwärmung oder Aufheizung für den Gasstrom vorgesehen ist; ansonsten wäre hier eine Kühleinrichtung 73 vorzusehen), um dann den wieder auf die entsprechende Temperatur gebrachten Gas- oder Luftstrom weiter - worauf später eingegangen wird - über entsprechende Ventilatoreinrichtungen beispielsweise wieder der Belüftungsdüsen-Zuführöffnung 53 zuzuführen, so dass der Gasstrom dann wiederum im beschriebenen Sinne über die Strömrichtung 55 dem Belüftungskanal 51 zugeführt wird.

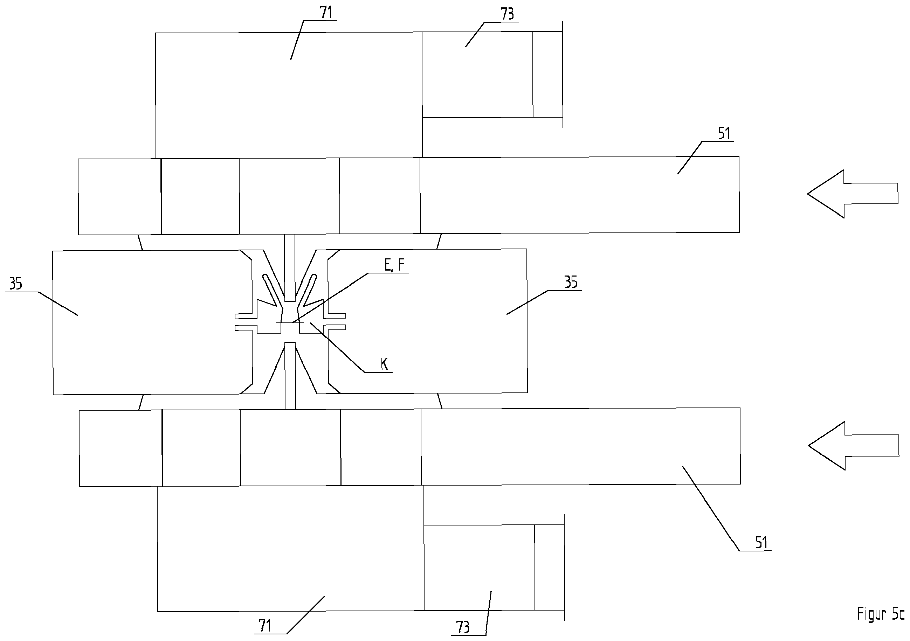

Eine entsprechende Belüftungsdüse ist, wie ausgeführt, dann auch bevorzugt spiegelbildlich entsprechend der Höhenlage der Filmebene E Bezug nehmend auf die Transportsystemkanäle 35 auf der Unterseite des Films F angeordnet, wie dies schematisch anhand von Figur 5c gezeigt ist.

Nachfolgend wird auf Figur 5b Bezug genommen, in der gezeigt ist, wie die Transportsystemkanäle 35 und damit die zugehörigen Kluppen K im seitlichen Abstand zueinander entfernter eingestellt sind, um einen bei Bedarf breiteren Film F entsprechend durch die Reckanlage zu transportieren und zu recken.

Aus dieser Querschnittsdarstellung gemäß Figur 5b ist auch das erfindungsgemäße Prinzip und der erfindungsgemäße Grundaufbau der erfindungsgemäßen Belüftungsdüse zu ersehen.

Aus der Darstellung gemäß Figur 5b ergibt sich nämlich, dass die Belüftungsdüse mit ihrem eigentlichen in Richtung Film F vorstehenden Belüftungsaustrittskanal 61 zumindest zweigeteilt ist und einen Belüftungskanal-Abschnitt 61a aufweist, der beispielsweise der bezogen auf die Abzugsrichtung 1 bzw. bezogen auf die Materialbahn oder den Kunststofffolienfilm F den links liegenden Kluppen K (bzw. Kluppenteil 6) der links liegenden verfahrbaren Kluppen K mit zugehörigem links liegenden Transportsystemkanal 35. Der davon getrennte Belüftungskanal-Abschnitt 61b ist dann auf der gegenüberliegenden Seite zur Material- oder Filmbahn F, also Bezug nehmend auf die Querschnittsdarstellung gemäß Figur 5b auf der rechten Seiten der Material- oder Filmbahn F angeordnet, und dabei den rechts liegenden oder auf der rechten Seite verfahrbaren Kluppen K und dem rechts liegenden Transportsystemkanal 35 zugeordnet. Von daher könnte vom Prinzip her auch bei den Belüftungskanalabständen 61a und 61b auch von Belüftungskanalhälften 61a und 61b gesprochen werden, die bevorzugt in einer senkrecht zur Filmebene und in Abzugsrichtung 1 verlaufenden Ebene geteilt sind und bevorzugt spiegelbildlich dazu angeordnet und/oder ausgebildet sind.

Die beiden Belüftungsaustrittskanal-Abschnitte 61a, 61b auf der zur Filmebene E abgewandt liegenden Seite gehen in parallel zur Filmebene E verlaufende Winkelabschnitte 64 über, wobei der dem einen Belüftungsaustrittsdüsen-Abschnitt 61a zugeordnete Winkelabschnitt 64a und der dem gegenüberliegenden Belüftungsaustrittsdüsen-Abschnitt 61b zugeordnete Winkelabschnitt 64b voneinander weg verlaufen. Diese Winkelabschnitte 64a, 64b begrenzen die Zuführöffnung 83 zur Zuführung des Gas- und Luftstroms von der Belüftungskammer 57 zur Belüftungsaustrittsdüse 61 in Seitenrichtung.

Mit anderen Worten werden bei Verstellung des Abstandes der Transportsystemkanäle 35 und damit des Abstandes zwischen den beiden seitlich zum Filmrand verlaufenden Schiene 15 und den darauf fortbewegten Kluppen K bevorzugt auch die beiden Belüftungskanal-Abschnitte 61a und 61b mehr oder weniger mit verstellt (auch wenn diese separat verstellbar sind), so dass dann die Breite des Belüftungskanals 61 in Querrichtung oder in senkrechter Richtung senkrecht zur Abzugsrichtung 1 deutlich breiter wird. Dabei ist die Belüftungskanal-Breite B so groß, dass die entsprechenden seitlichen Belüftungskanalwände 62a bzw. 62b (die teilweise nachfolgend noch als Belüftungskanal-Bleche bezeichnet werden) so eingestellt bzw. mit der Breiteneinstellung der Transportsystemkanäle 35 so mitverstellt werden, dass das in Richtung Film F weisende stirnseitige Ende 62c der Belüftungskanalwände 62a und 62b bevorzugt in gleicher Relativlage zu den Kluppen K bzw. zu den Kluppenteilen 6 zu liegen kommt, wie bei der in engem Abstand zueinander eingestellten Lage der Transportsystemkanäle 35 mit den zugehörigen verfahrbaren Kluppen K gemäß der Querschnittsdarstellung nach Figur 5a.

Denn auch bei der Variante gemäß Figur 5b kann nunmehr mehr oder weniger über die gesamte Breite des Films F der Luft- oder Gasstrom dem Film F zugeführt werden, ohne durch die Kluppenkörper abgekühlt zu werden, wie dies bezüglich des Standes der Technik als nachteilig beschrieben wurde.

Auch bei der Einstellung gemäß Figur 5b kann dann der dem Film F zugeführte Luft- oder Gasstrom wiederum vor allem zwischen den verfahrbaren Kluppen entsprechend den Pfeildarstellungen 67 und 69 über den Abstandsraum 43 und den Rücksaugkanal 70 zur Rücksaugdüse oder -kammer 71 und von dort gegebenenfalls über eine Heizeinrichtung 73 weiter umströmen.

Mit der erfindungsgemäßen Anordnung lässt sich also eine Breiteneinstellung bezüglich Film und zugehöriger Belüftungsdüse in einer Dimension durchführen, wie dies im Stand der Technik bisher nicht möglich war. Gleichwohl kann der zugeführte temperierte Gasstrom unmittelbar direkt dem Film F zugeführt werden, da die eigentliche Düsenaustrittsöffnung 62 auch bei der Breiteneinstellung gemäß Figur 5b unmittelbar benachbart zur Filmebene E liegend angeordnet werden kann.

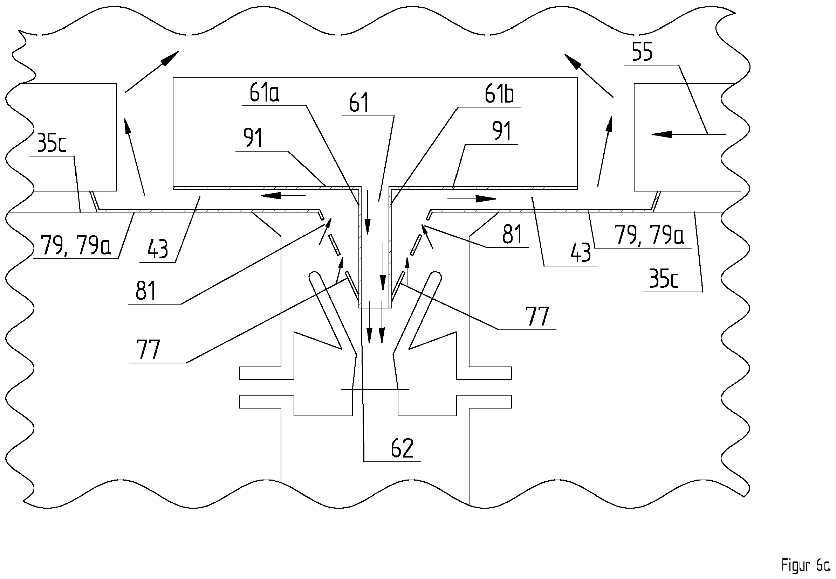

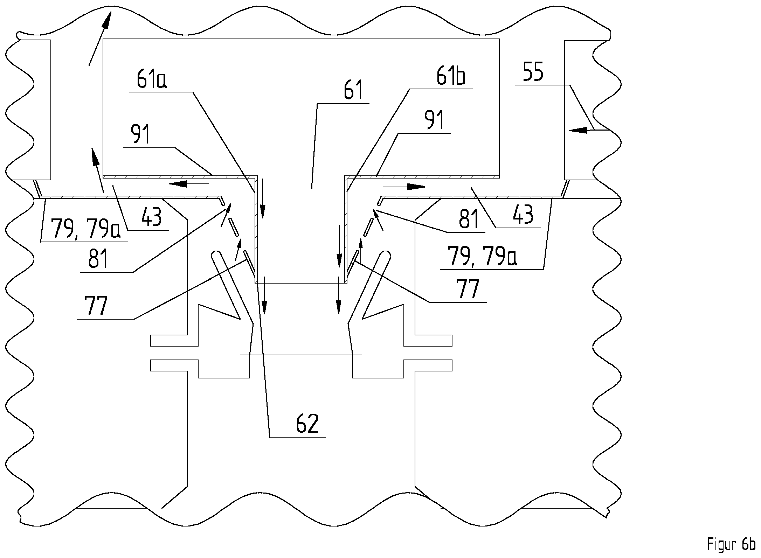

Nachfolgend wird anhand der Figuren 6a und 6b ein vergleichbares Ausführungsbeispiel in Querschnittsdarstellung gezeigt, und zwar einmal für einen engen Abstand zwischen den benachbarten Kluppen bei kleiner oder minimaler Breite FB des Kunststofffolienfilms F sowie bei einer demgegenüber großen Filmbreite FB, wie anhand von Figur 6b dargestellt.

Der wesentliche Unterschied zu dem vorausgegangenen Ausführungsbeispiel ist, dass bei der Variante gemäß Figuren 6a und 6b noch den jeweiligen Transportsystemkanälen 35 und damit den gegenüberliegenden Kluppen K zugeordnete Leitbleche oder Leitwände 77 vorgesehen sind, die letztlich mit den zugehörigen Belüftungskanal-Abschnitten 61a bzw. 61b an ihrem einen Ende verbunden sind, vorzugsweise in der Nähe oder unmittelbar am filmseitigen Belüftungskanalende oder Belüftungskanalkante 62c.

Im gezeigten Ausführungsbeispiel verlaufen diese Leitwände oder Leitbleche 77 von ihrer Befestigungsstelle 62d bevorzugt an den jeweils gegenüberliegenden Außenseiten der Belüftungskanal-Abschnitte 61a und 61b von der Filmebene E aus betrachtet divergierend und gehen dann in einen den Abstandsraum 43 umfassenden Rückführkanal 79 über, dessen dem Film F zugewandt liegende Rückführkanalwand 79a beispielsweise auf der Oberseite 35c (Deckenseite 35c) des Transportsystemkanals 35 oder des Transportsystem-Kanalgehäuses 35a unmittelbar oder mittelbar aufliegt. Dadurch kann bei einer Verstellung des Systems hin zu einer größeren oder geringeren Breiteneinstellung B der Düsenaustrittsöffnung 62 und damit der beiden voneinander weg oder aufeinander zu verstellbaren Belüftungskanal-Abschnitten 61a und 61b bevorzugt mit dem jeweils zugeordneten Transportsystemkanal 35 entsprechend den Pfeildarstellungen 39 voneinander weg oder aufeinander zu verstellt werden.

Damit der rückführende Gas- oder Luftstrom entsprechend den Pfeildarstellungen 67 in die entsprechenden Rücklaufwege einströmen kann, sind die Leitwände oder Leitbleche 77 noch mit Durchtrittsöffnungen 81 versehen, beispielsweise Lochöffnungen oder Schlitzöffnungen. Bei den Ausführungsbeispielen gemäß Figuren 6a und 6b sind diese Schlitz- oder Spaltöffnungen 81 als senkrecht zur Zeichenebene verlaufende Längsschlitze vorgesehen, so dass der rückgeführte Gasstrom entsprechend den gezeigten Pfeildarstellungen 67' von dem Bereich unterhalb dieser Leitwände oder Leitbleche 77 (in welchem sich die verfahrbaren Kluppen K befinden) in den Raum oberhalb der Leitbleche bei der in Figur 6b gezeigten oberen Belüftungsdüsenanordnung in den Rückführkanal einströmen kann. Wie mehrfach ausgeführt ist, wäre die Belüftungsdüse auf der Unterseite des Films bevorzugt entsprechend auszubilden.

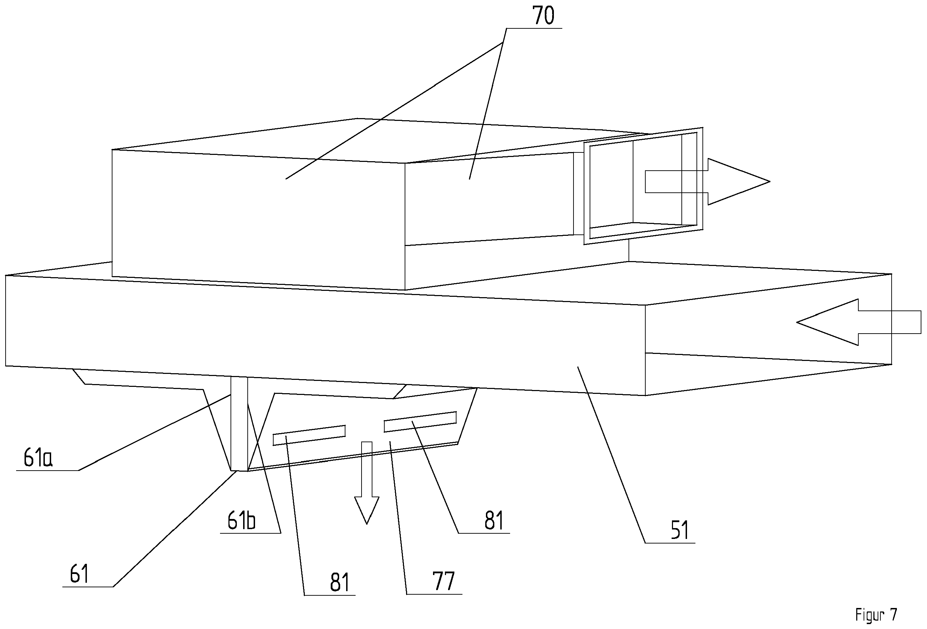

Um die eigentliche Belüftungsdüse bzw. den Belüftungsaustrittskanal 61 beispielsweise in zusammengefahrenem schmalen Zustand räumlich darzustellen, wird nachfolgend noch auf Figur 7 Bezug genommen. Hier sind in den seitlichen Luftwänden oder Leitblechen 77 die erwähnten Durchtrittsöffnungen 81, hier in Form von schlitzförmigen Durchtrittsöffnungen 81, gezeigt.

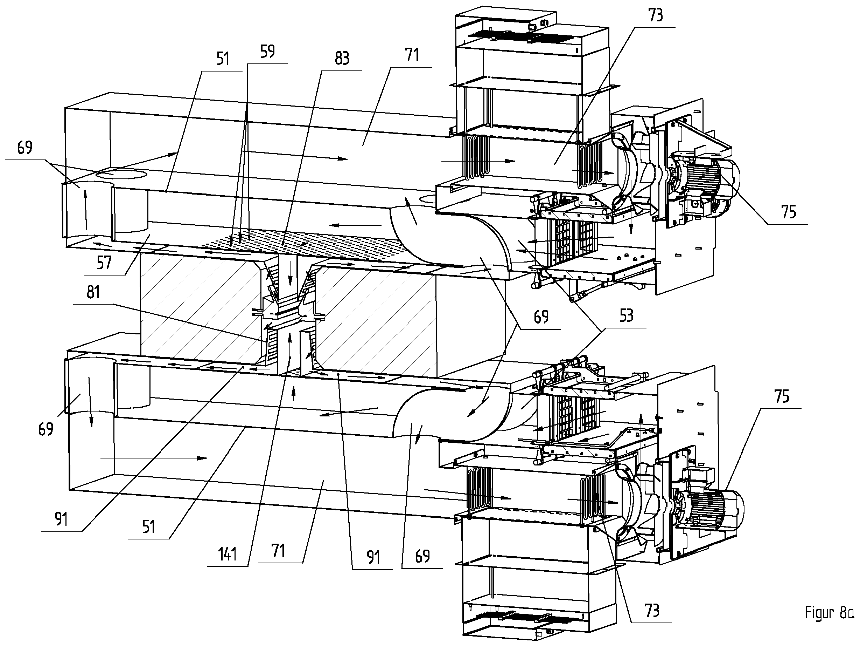

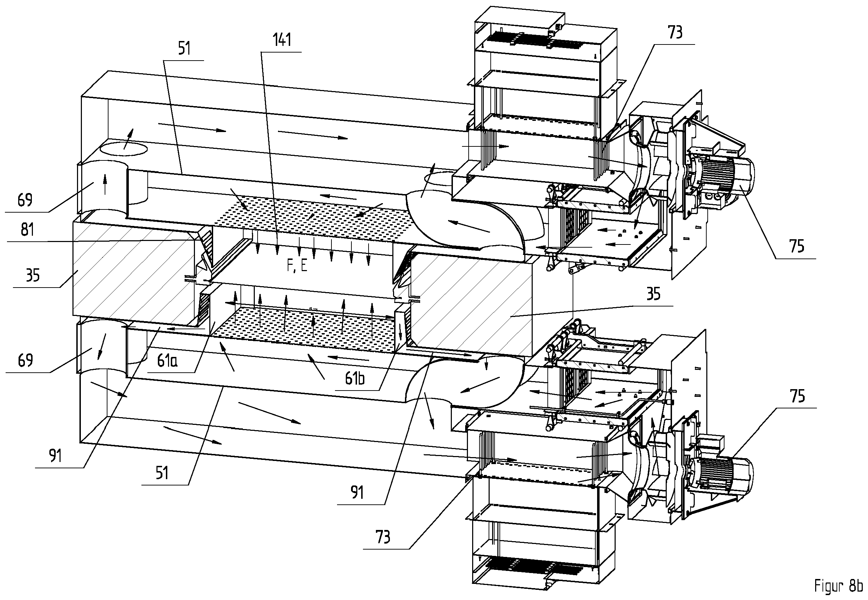

Anhand von Figuren 8a und 8b ist nunmehr jeweils eine entsprechende räumliche Darstellung einer kompletten Belüftungsdüse mit einer oberen Belüftungsdüse 51 und entsprechender unteren Belüftungsdüse 51' wiedergegeben, und zwar im Querschnitt quer zur Filmebene E und dabei quer zur Abzugsrichtung 1 des Films F. Dabei ist in Figur 8a die Darstellung bei einer Anordnung gezeigt, bei der der Kunststofffilm eine geringe Breite FB aufweist, also die entsprechenden seitlichen, auf den Schienen 15 umlaufenden Kluppen K in einem geringen zeitlichen Abstand zueinander verfahren werden.

Bei der Darstellung gemäß Figur 8b ist die entsprechende Belüftungsdüse mit ihrer oberen und unteren Belüftungsdüse 51 und 51' in eine maximale seitliche Abstandslage zueinander gebracht, um einen besonders breiten Film mit großer Breite FB am Filmrand eingespannt zu halten und in Abzugsrichtung durch die Anlage hindurch zu bewegen.

Entsprechend sind die beiden Belüftungskanal-Abschnitte 61a und 61b mit den zugehörigen umlaufenden Kluppen K, ihren Schienen 15 und hier den Transportsystemkanälen 35 einschließlich der Transportsystem-Kanalgehäuse 35a in maximale Breitenabstands-Lage gebracht.

Aus dieser Darstellung ist auch zu ersehen, dass die erwähnten Leitwände oder Leitbleche 77 mehrere, beispielsweise übereinander angeordnete Durchtrittsöffnungen 81 aufweisen können, insbesondere dann, wenn die Durchtrittsöffnungen 81 schlitzförmig gestaltet sind, also parallel zueinander und parallel zur Filmebene E. Ansonsten könnten aber auch quer dazu verlaufende Längsschlitze oder flächig verteilte Lochöffnungen mit einer Vielzahl von Gasdurchtrittsöffnungen vorgesehen sein.

Aus den Figuren 8a und 8b ist auch zu ersehen, dass der eigentliche Gaszuführbereich vom oberen Düsenkasten 51 in den eigentlichen Belüftungskanal 61 über eine offene Gasdurchtrittswand 83 in den eigentlichen Belüftungskanal 61 erfolgt. Die Gasdurchtrittswand 83 umfasst eine Anordnung mit einer oder mehreren Austrittsöffnungen 59, also mit einer oder mehreren Düseneintrittsöffnungen 59 für den Belüftungsaustrittskanal 61, worüber der Gas- oder Luftstrom von der Belüftungskammer 57 in den eigentlichen Belüftungsaustrittskanal 61 strömen kann. Dazu sind die Austrittsöffnungen 59 und damit die Düseneintrittsöffnung 59 in den Belüftungsaustrittskanal 61 in der Gasdurchtrittswand 83 im gezeigten Ausführungsbeispiel in Form eines Lochgitters gestaltet, also mit einer Vielzahl von in Längs- und Querrichtung versetzt zueinander angeordneten Einzellöchern oder einer Vielzahl von Einzel-Öffnungen, die also in Längs- und Querrichtung in dieser Gasdurchtrittswand 83 eingebracht sind.

Dabei sind die entsprechenden Luft- oder Gasdurchtrittsöffnungen 59 in einem solchen Bereich verteilt angeordnet, der sicherstellt, dass der entsprechende Gas- oder Luftstrom auch bei maximaler Breitenabstandsverstellung der Belüftungskanal-Abschnitte 61a und 61b gemäß Figur 8b möglichst ungehindert über die gesamte Breiten- und Längseinstellung durch diese Gasdurchtrittswand 83 in den eigentlichen Belüftungskanal 61 einströmen kann, wie dies auch anhand der nebeneinander angeordneten Pfeile 141 wiedergegeben ist.

Aus den Darstellungen gemäß den Figuren 6a und 6b wie aber auch den Figuren 8a und 8b ist zu ersehen oder zumindest zu entnehmen, dass die beiden Belüftungskanal-Abschnitte 61a und 61b an ihrer filmabgewandten Seite in eine Abdeckwand oder ein Abdeckblech 91 übergehen, welches parallel zur Filmebene E verläuft und bevorzugt unmittelbar an der Unterseite der unteren Wand der Belüftungsdüse oder der Belüftungskammer 57 anliegt (bezogen auf die obere Belüftungsdüse gemäß Figuren 6b und 8b). Ist das gesamte System auf eine geringe Filmbreite gemäß Figuren 6a und 8a aufeinander zu verstellt, decken diese Abdeckwände oder Abdeckbleche 91 den Großteil der lochförmigen Gasdurchtrittswand 83 als Teil der filmseitigen Begrenzungswand 51a ab, so dass nur über jene nicht abgeschirmten verbleibenden Durchtrittsöffnungen 81 ein Gas- oder Luftstrom in den eigentlichen Belüftungskanal 61 einströmen kann, der also durch die erwähnten Abdeckwände oder Abdeckbleche 91 nicht verschlossen ist.

Wird das gesamte System auf eine demgegenüber große Filmbreite FB eingestellt, wie anhand Figuren 6b und 8b gezeigt ist, werden nicht nur die beiden Belüftungskanal-Abschnitte 61a und 61b voneinander weg verstellt (mit den zugehörigen Transportsystemkanälen 35), sondern auch die zugehörigen Abdeckwände oder Abdeckbleche 91, wodurch ein demgegenüber größerer bis maximaler Bereich der Gasdurchtrittswand 83 freigegeben wird, der zugeführte Gas- oder Luftstrom also mehr oder weniger bevorzugt in der gesamten Breite B des Belüftungskanals 61 von der oberen Belüftungskammer 57 oder dem Düsenkasten 51 in den Belüftungskanal 61 einströmen kann.

Auch wenn das System auf die Belüftung eines breiten Kunststofffolienfilms eingestellt ist, also bei auseinandergefahrenem Belüftungskanal-Abschnitten 61a du 61b, sind die erfindungsgemäß Vorteile immer noch realisiert, da die Düsenaustrittsöffnung 62 immer noch untermittelbarer Nähe zum Film F und zur Filmebene E angeordnet ist, und dabei der entsprechende Gas- oder Luftstrom weiterhin durch den Belüftungskanal dem Film F zugeführt werden kann, und zwar mehr oder weniger an den eigentlichen Kluppen K oder Kluppenteilen 6 vorbei, ohne verwirbelt zu werden und ohne durch die eventuell kalten Kluppenkörper außen liegend eine Temperaturveränderung zu erfahren. Dabei kann die Einstellung, bei der ein schmaler Kunststofffilm mit der Belüftungsdüse entsprechend temperiert oder gekühlt wird, bis hin zu einer Einstellung dergestalt, dass ein demgegenüber sehr breiter Kunststofffolienfilm entsprechend behandelt wird, ungehindert über die gesamte Verstellbreite vorgenommen werden.

Aus dieser Darstellung gemäß Figur 8a und 8b ist auch zu ersehen, dass die erwähnten Rücksaugkanäle 69 mehrfach z.B. vorgesehen sein können, nämlich in Form von mehreren rohrförmigen Kanälen, die in Abzugsrichtung 1 benachbart zueinander angeordnet sind.

Anhand von Figuren 8a und 8b ist zudem ferner angedeutet, dass am Ende der oberen Rücksaugkammer 69 die bereits erwähnte Heiz-, Temperier- oder bei Bedarf auch eine Kühleinrichtung 73 vorgesehen sein kann, so dass hierüber über einen nachfolgenden Ventilator 75 der entsprechend rückgeführte Luft- oder Gasstrom angesaugt und über die Austrittseite des Ventilators 75 dann wieder der Einführöffnung 53 der Düsenanordnung zugeführt werden kann.

## Patentansprüche

1. Belüftungsmodul, insbesondere für eine Reckanlage zum Recken eines Kunststofffilms, mit folgenden Merkmalen:
- es ist ein Belüftungsaustrittskanal (61) mit einer Gasstrom-Eintrittsseite (61c) und einer dazu gegenüberliegenden Gasstrom-Austrittsseite (61d) vorgesehen,
- der Belüftungsaustrittskanal (61) ist in Längsrichtung zwischen seiner Gasstrom-Eintrittsseite (61c) und seiner dazu gegenüberliegenden Gasstrom-Austrittsseite (61d) unter Bildung zumindest zweier Belüftungsaustrittskanal-Abschnitte (61a, 61b) getrennt, derart, dass die zumindest beiden Belüftungsaustrittskanal-Abschnitte (61a, 61b) quer zur Längserstreckung des Belüftungsaustrittskanals (61) voneinander weg und aufeinander zu verstellbar sind, wodurch die Breite (B) des Belüftungsaustrittskanals (61) und damit der Durchströmquerschnitt vergrößer- bzw. verringerbar ist.

2. Belüftungsmodul nach Anspruch 1, **dadurch gekennzeichnet, dass** die beiden Belüftungsaustrittskanal-Abschnitte (61a, 61b) auf Seiten ihrer Düseneintrittsöffnung (59) und/oder auf Seiten ihrer zur Düsenaustrittsöffnung (62) abgewandt liegenden Seite in Winkelabschnitte (64) übergehen, wobei der dem einen Belüftungsaustrittskanal-Abschnitt (61a) zugeordnete Winkelabschnitt (64a) und der dem gegenüberliegenden Belüftungsaustrittskanal-Abschnitt (61b) zugeordnete Winkelabschnitt (64b) voneinander weg verlaufen, und dass diese Winkelabschnitte (64a, 64b) die Zuführöffnung (83) zur Zuführung des Gas- und Luftstroms von der Belüftungskammer (57) zur Belüftungsaustrittskanal (61) in Seitenrichtung begrenzen.

3. Belüftungsmodul nach Anspruch 1 oder 2, **dadurch gekennzeichnet, dass** die beiden Belüftungsaustrittskanal-Abschnitte (61a, 61b) an den jeweils voneinander entfernt liegenden Außenseiten über jeweils zumindest eine Leitwand (77) oder ein Leitblech (77) abgestützt sind.

4. Belüftungsmodul nach Anspruch 3, **dadurch gekennzeichnet,**
a) **dass** die Leitwand (77) oder das Leitblech (77) an den jeweiligen gegenüberliegenden Außenseiten der Belüftungsaustrittskanal-Abschnitte (61a, 61b) von der Düsenaustrittsöffnung (62) divergierend weg verlaufen und in einen Tragabschnitt übergehen, wobei der Tragabschnitt parallel zur einer Filmebene (E) verläuft, wenn das Belüftungsmodul in der Reckanlage angeordnet ist, und wobei sich der Tragabschnitt an dem zur Filmebene (E) entfernt liegenden Ende des Transportsystemkanals (35), des Transportsystem-Kanalgehäuses (35a) oder der Transportsystem-Abschirmwand (35b) abstützt, und/oder
b) **dass** die Leitwand (77) oder das Leitblech (77) mit zumindest einer oder mehreren Durchtrittsöffnungen (81) versehen ist, worüber ein Gas- oder Luft-Rückstrom von der dem Film (F) der Gasstrom-Austrittsseite (61d) zugewandten Seite durch diese zumindest eine Durchtrittsöffnung (81) in den auf die zur Leitwand oder zum Leitblech (77) entfernt liegenden Seite in den dort gebildeten Rückströmkanal einströmen kann, wenn das Belüftungsmodul in der Reckanlage angeordnet ist.

5. Reckanlage zum Recken eines Kunststofffilms, umfassend zumindest ein Belüftungsmodul nach einem der vorhergehenden Ansprüche, wobei die Reckanlage die folgenden Merkmale aufweist:
- es sind zwei umlaufende Verfahrwege oder Bahnen (2) vorgesehen, die im seitlichen Abstand zueinander angeordnet sind,
- die Verfahrwege oder Bahnen (2) sind zumindest teilweise durch Transport- und/oder Führungsschienen (15) gebildet,
- auf diesen Transport- und/oder Führungsschienen (15) sind Kluppen (K) verfahrbar, die über ein Transportteil (7) auf den Transport- und/oder Führungsschienen (15) verfahrbar sind und dabei ein filmseitiges Kluppenteil (6) umfassen, wobei bezogen auf die Abzugsrichtung (1) des Films (F) auf der linken Seite verfahrbaren Kluppen (K) den linken Filmrand (5) und auf der rechten Seite verfahrbare Kluppen (K) den rechten Filmrand (5) eines durch die Reckanlage hindurch verfahrbaren Films (F) erfassen und den Film (F) in seiner dadurch definierten Filmebene (E) durch die Reckanlage hindurch befördern,
- oberhalb der Filmebene (E) und/oder unterhalb dieser Filmebene (E) ist ein oberes Belüftungsmodul umfassend eine obere Belüftungsdüse (51) und/oder ein unteres Belüftungsmodul umfassend eine untere Belüftungsdüse (51') vorgesehen, wobei die zumindest beiden Belüftungsaustrittskanal-Abschnitte (61a, 61b) des Belüftungsmoduls quer zur Abzugsrichtung (1) des Films (F) und parallel zur Filmebene (E) oder zumindest mit einer Komponente parallel zur Filmebene (E) voneinander weg oder aufeinander zu verstellbar sind.

6. Reckanlage nach Anspruch 5, **gekennzeichnet durch** die folgenden weiteren Merkmale:
- die obere und/oder untere Belüftungsdüse (51, 51') umfasst jeweils den zumindest zweigeteilten Belüftungskanal (61) derart, dass der eine Belüftungsaustrittskanal-Abschnitt (61a) den in Abzugsrichtung (1) links liegenden Kluppen (K) und dem links liegenden Transportsystemkanal (35) zugeordnet ist, wohingegen der gegenüberliegende zweite Belüftungsaustrittskanal-Abschnitt (61b) in Bezug auf die Abzugsrichtung (1) des Films (F) den rechts dazu verfahrbaren Kluppen (K) und dem rechts dazu liegenden Transportsystemkanal (35) zugeordnet ist, und
- die beiden Belüftungsaustrittskanal-Abschnitte (61a, 61b) sind unmittelbar oder mittelbar gegenüber einer zum Film (F) entfernt liegenden Belüftungskammer (57) aufeinander zu und voneinander weg verstellbar, und vorzugsweise über die Belüftungskammer (57) und/oder den zugehörigen Transportsystemkanal (35) gehalten und insbesondere verschiebbar gehalten.

7. Reckanlage nach Anspruch 5 oder 6, **dadurch gekennzeichnet,**
a) **dass** die beiden in Richtung Film (F) ausgerichtet verlaufenden Belüftungsaustrittskanal-Abschnitte (61a, 61b) in gleichem Maße voneinander weg oder aufeinander zu verstellbar sind, wie die beiden seitlichen Transport- und/oder Führungsschienen (15) im gleichen Reckabschnitt der Reckanlage voneinander weg und aufeinander zu verstellbar sind, und /oder
b) **dass** die Belüftungsaustrittskanal-Abschnitte (61a, 61b) gemeinsam mit den beiden seitlichen Transport- und/oder Führungsschienen (15) und/oder den gemeinsam mit den beiden seitlichen Transportsystemkanälen (35) voneinander weg oder aufeinander zu verstellbar sind, und/oder
c) **dass** die Breite des Belüftungsaustrittskanals (61) quer zur Abzugsrichtung (1) des Films (F) so groß ist oder so groß einstellbar ist, dass die Breite (B) des Belüftungsaustrittskanals (61) dem minimalen Abstand zweier gegenüberliegender Kluppen (K) entspricht oder um weniger als 30%, insbesondere weniger als 25%, 20% 15%, 10% und insbesondere weniger als 5% davon abweicht.

8. Reckanlage nach einem der Ansprüche 5 bis 7, **dadurch gekennzeichnet, dass** die Kluppen (K) sich in ein Kluppenteil (6) und ein über eine Brücke (8) damit verbundenes Transportteil (7) gliedern, wobei das Transportteil (7) auf den Transport- und/oder Führungsschienen (15) verfahrbar ist, und dass zwischen dem Kluppenteil (6) und dem Transportteil (7) eine Transportsystem-Abschirmwand (35b) vorgesehen ist, die eine Höhe (H) aufweist, und dass der Belüftungsaustrittskanal (61) soweit in Richtung Filmebene (E) vorsteht, dass die Belüftungsaustritts-Düsenöffnung (62)
a) näher zur Filmebene (E) liegt als das zur Filmebene (E) entfernt liegende Ende der Transportsystem-Abschirmwand (35b) und/oder
b) so nahe zur Filmebene (E) beabstandet ist, dass die Belüftungsaustritts-Düsenöffnung (62c) in einem geringeren Abstand (X) zur Filmebene (E) angeordnet ist als der Abstand (XX) zwischen einem zur Filmebene (E) entferntesten Punkt eines Kluppenteils (6) und/oder eines zugehörigen Kluppenhebels (25c) und der Filmebene (E).

9. Reckanlage nach einem der Ansprüche 5 bis 8, **dadurch gekennzeichnet, dass** der in Richtung Film (F) vorstehende Belüftungsaustrittskanal (61) mit seinen beiden Belüftungsaustrittskanal-Abschnitten (61a, 61b) von einer Belüftungskammer (57) ausgeht, die gegenüber der Filmebene (E) entfernter liegt als das entfernte Ende der Transportsystem-Abschirmwand (35b).

10. Reckanlage nach einem der Ansprüche 5 bis 9, **dadurch gekennzeichnet, dass** die Transportsystem-Abschirmwand (35b) Teil eines Transportsystemkanals (35) und/oder Transportsystem-Kanalgehäuses (35a) ist.

11. Reckanlage nach einem der Ansprüche 5 bis 10, **dadurch gekennzeichnet,**
a) **dass** ein Gas-Rückströmweg vorgesehen ist, der zwischen jeweils zwei in Abzugsrichtung (1) benachbart zueinander liegende Kluppen (K) zum einen gebildet ist und über einen Abstandsraum (43) zwischen einem entfernt zur Filmebene (E) endenden Transportsystemkanals (35) oder Transportsystem-Kanalgehäuses (35a) zum einen und einer dazu noch entfernter liegenden Begrenzungswand einer Belüftungskammer (57) gebildet ist, und/oder
b) **dass** der Gas-Rückströmweg für den Gas- oder Luftstrom über Rücksaugkanäle (69) zu einer Rücksaugkammer (71) erfolgt, wobei die Rücksaugkanäle (69) durch Kanäle gebildet sind, die durch eine Belüftungskammer (57) zur Zuführung eines Luft- oder Gasstroms verläuft.

12. Reckanlage nach einem der Ansprüche 5 bis 11, **dadurch gekennzeichnet, dass** die beiden Belüftungsaustrittskanal-Abschnitte (61a, 61b) auf der zur Filmebene (E) abgewandt liegenden Seite in parallel zur Filmebene (E) verlaufende Winkelabschnitte (64) übergehen, wobei der dem einen Belüftungsaustrittskanal-Abschnitt (61a) zugeordnete Winkelabschnitt (64a) und der dem gegenüberliegenden Belüftungsaustrittskanal-Abschnitt (61b) zugeordnete Winkelabschnitt (64b) voneinander weg verlaufen, und dass diese Winkelabschnitte (64a, 64b) die Zuführöffnung (83) zur Zuführung des Gas- und Luftstroms von der Belüftungskammer (57) zur Belüftungsaustrittsdüse (61) in Seitenrichtung begrenzen.

13. Reckanlage nach einem der Ansprüche 5 bis 12, **dadurch gekennzeichnet, dass** die maximale Zuführöffnung (83) zwischen der Belüftungskammer (57) und der Düseneintrittsöffnung (59) des Belüftungsaustrittskanals (61) durch ein Loch- und/oder Schlitzgitter gebildet ist, der jenem Breitenbereich (B) entspricht oder um vorzugsweise weniger als 30%, insbesondere weniger als 25%, 20%, 15%, 10% oder weniger als 5% von dem Breitenbereich (B) abweicht, bis zu dem die beiden Belüftungsaustrittskanal -Abschnitte (61a, 61b) verstellbar und/oder einstellbar sind.

14. Reckanlage nach einem der Ansprüche 5-13, **dadurch gekennzeichnet,**
a) **dass** die Leitwand (77) oder das Leitblech (77) an den jeweiligen gegenüberliegenden Außenseiten der Belüftungsaustrittskanal-Abschnitte (61a, 61b) von der Filmebene (E) divergierend weg verlaufen und in einen parallel zur Filmebene (E) verlaufenden Tragabschnitt übergehen, der sich an dem zur Filmebene (E) entfernt liegenden Ende des Transportsystemkanals (35), des Transportsystem-Kanalgehäuses (35a) oder der Transportsystem-Abschirmwand (35b) abstützt, und/oder
b) **dass** die Leitwand (77) oder das Leitblech (77) mit zumindest einer oder mehreren Durchtrittsöffnungen (81) derart versehen ist, dass darüber ein Gas- oder Luft-Rückstrom von der dem Film (F) zugewandten Seite durch diese zumindest eine Durchtrittsöffnung (81) auf die zur Leitwand (77) oder zum Leitblech (77) entfernt liegenden Seite in den dort gebildeten Rückströmkanal einströmen kann.

15. Reckanlage nach einem der Ansprüche 5 bis 14, **dadurch gekennzeichnet, dass** eine oder mehrere Ventilatoranordnungen vorgesehen sind,
a) wobei eingangsseitig zu der zumindest einen Belüftungskammer (57) oder einer dazu vorgelagerten Zwischenkammer zumindest eine Ventilatoranordnung (75) vorgesehen ist, worüber der zuzuführende Gas- oder Luftstrom über die Belüftungskammer (57) in den Belüftungsaustrittskanal (61) transportierbar ist, und/oder
b) wobei an dem Austrittsende eines Gas- oder Luftstrom-Rückführkanals zumindest eine Ventilatoranordnung (75) angeordnet ist, worüber der rückgeführte Gas- oder Luftstrom ansaugbar und eintrittsseitig direkt oder mittelbar in eine der zumindest einen Belüftungskammer (57) einblasbar ist, und/oder
c) wobei in dem umströmenden Kreislauf für den Gas- oder Luftstrom eine Heizeinrichtung (73) vorgesehen ist, vorzugsweise der Ansaugseite der Ventilatoreinrichtung (75) vorgelagert.

## Claims

1. Ventilation module, in particular for a stretching system for stretching a plastics film, having the following features:
- a ventilation outlet channel (61) having a gas flow inlet side (61c) and an opposite gas flow outlet side (61d) is provided,
- the ventilation outlet channel (61) is separated in the longitudinal direction between its gas flow inlet side (61c) and its opposite gas flow outlet side (61d) to form at least two ventilation outlet channel portions (61a, 61b), such that the at least two ventilation outlet channel portions (61a, 61b) are adjustable away from and towards one another transversely to the longitudinal extent of the ventilation outlet channel (61), whereby the width (B) of the ventilation outlet channel (61) and thus the flow cross section can be increased or decreased.

2. Ventilation module according to claim 2, **characterised in that** the two ventilation outlet channel portions (61a, 61b) on the side of their nozzle inlet opening (59) and/or on their side facing away from their nozzle outlet opening (62) merge into angular portions (64), wherein the angular outlet portion (64a) associated with a ventilation outlet channel portion (61a) and the angular portion (64b) associated with the opposite ventilation outlet channel portion (61b) run away from one another, and that these angular portions (64a, 64b) delimit the supply opening (83) for supplying the gas and air flow from the ventilation chamber (57) to the ventilation outlet channel (61) in the lateral direction.

3. Ventilation module according to either claim 1 to claim 2, **characterised in that** the two ventilation outlet channel portions (61a, 61b) are supported on the respective outer sides which are at a distance from one another in each case by at least one guide wall (77) or one guide plate (77).

4. Ventilation module according to claim 3, **characterised in that**
a) the guide wall (77) or the guide plate (77) on the respective opposite outer sides of the ventilation outlet channel portions (61a, 61b) diverge away from the nozzle outlet opening (62) and merge into a support portion, wherein the support portion is running parallel to the film plane (E), when the ventilation module is arranged within the stretching system, and wherein the support portion is supported on the end of the transport system channel (35), the transport system channel housing (35a) or the transport system shielding wall (35b) which is remote from the film plane (E), and/or
b) the guide wall (77) or the guide plate (77) is provided with at least one or a plurality of passage openings (81), via which a gas or air backflow can flow from the side facing the film (F) of the gas flow outlet side (61d) can flow through this at least one passage opening (81) into the return flow channel formed there on the side remote from the guide wall or guide plate (77), when the ventilation module is arranged within the stretching system.

5. Stretching system for stretching a plastics film, comprising at least one ventilation module according to any one of the preceding claims, the stretching system having the following features:
- two circumferential travel paths or tracks (2) are provided, which are arranged at a lateral distance from one another,
- the travel paths or tracks (2) are formed at least in part by transport and/or guide rails (15),
- clips (K) are movable on these transport and/or guide rails (15), which clips are movable via a transport part (7) on the transport and/or guide rails (15) and thereby comprise a film-side clip part (6), wherein, relative to the pulling direction (1) of the film (F), movable clips (K) on the left side (5) grasp the left film edge and movable clips (K) on the right side grasp the right film edge (5) of a film (F) which is movable through the stretching system (F) and convey the film (F) in the film plane (E) defined thereby through the stretching system,
- an upper ventilation module including an upper ventilation nozzle (51) and/or a lower ventilation module including a lower ventilation nozzle (51') is provided above the film plane (E) and/or below this film plane (E), wherein the at least two ventilation outlet channel portions (61a, 61b) of the ventilation module are adjustable away from or towards one another transverse to the pulling direction (1) of the film (F) and parallel to the film plane (E) or at least from or towards one component parallel to the film plane (E).

6. Stretching system according to claim 5, **characterised by** the following further features:
- the upper and/or lower ventilation nozzle (51, 51') in each case comprises the at least two-part ventilation channel (61), such that the one ventilation outlet channel portion (61a) is assigned to the clips (K) on the left in the pulling direction (1) and is assigned to the left transport system channel (35), whereas the opposite second ventilation outlet channel portion (61b) is assigned to the clips (K) which are movable to the right in relation to the pulling direction (1) of the film (F) and to the transport system channel (35) to the right, and
- the two ventilation outlet channel portions (61a, 61b) are adjustable directly or indirectly towards and away from one another with respect to a ventilation chamber (57) located away from the film (F), and preferably are held and in particular movably held via the ventilation chamber (57) and/or the associated transport system channel (35).

7. Stretching system according to either claim 5 or claim 6, **characterised in that**
a) the two ventilation outlet channel portions (61a, 61b), which are oriented in the direction of the film (F), are adjustable to the same extent away from or towards one another as the two lateral transport and/or guide rails (15) in the same stretching portion of the stretching system are adjustable away from and towards each other, and/or
b) the ventilation outlet channel portions (61a, 61b) are adjustable away from or towards each other, together with the two lateral transport and/or guide rails (15) and/or together with the two lateral transport system channels (35), or
c) the width of the ventilation outlet channel (61) is so wide transversely to the pulling direction (1) of the film (F), or is adjustable so that the width (B) of the ventilation outlet channel (61) corresponds to the minimum distance between two opposite clips (K) or deviates therefrom by less than 30%, in particular less than 25%, 20% 15%, 10% and in particular less than 5%.

8. Stretching system according to any of claims 5 to 7, **characterised in that** the clips (K) are divided into a clip part (6) and a transport part (7) connected thereto via a bridge (8), wherein the transport part (7) is movable on the transport and/or guide rails (15), and that between the clip part (6) and the transport part (7) a transport system shielding wall (35b) is provided, which has a height (H), and that the ventilation outlet channel (61) protrudes so far in the direction of the film plane (E) that the ventilation outlet nozzle opening (62)
a) is closer to the film plane (E) than the end of the transport system shielding wall (35b) which is at a distance from the film plane (E), and/or
b) is so close to the film plane (E) that the ventilation outlet nozzle opening (62c) is arranged at a smaller distance (X) from the film plane (E) than the distance (XX) between a point of a clip part (6) and/or an associated clip lever (25c) furthest from the film plane (E) and the film plane (E).

9. Stretching system according to any of claims 5 to 8, **characterised in that** the ventilation outlet channel (61) protruding in the direction of the film (F) with its two ventilation outlet channel portions (61a, 61b) starts from a ventilation chamber (57) that is further away from the film plane (E) than the distant end of the transport system shield wall (35b).

10. Stretching system according to any of claims 5 to 9, **characterised in that** the transport system shielding wall (35b) is part of a transport system channel (35) and/or transport system channel housing (35a).

11. Stretching system according to any of claims 5 to 10, **characterised in that**
a) a gas return flow path is provided, which is formed between two clips (K) lying adjacent to each other in the pulling direction (1) and is formed by a spacing space (43) between a transport system channel (35) or transport system channel housing (35a) ending at a distance from the film plane (E), and an even more distant boundary wall of a ventilation chamber (57), and/or
b) the return flow path for the gas or air flow takes place via return channels (69) to a return chamber (71), wherein the return channels (69) are formed by channels which run through a ventilation chamber (57) for supplying an air or gas flow.

12. Stretching system according to any of claims 5 to 11, **characterised in that** the two ventilation outlet channel portions (61a, 61b) on the side facing away from the film plane (E) merge into angular portions (64) running parallel to the film plane (E), wherein the angular portion (64a) associated with the one ventilation outlet channel portion (61a) and the angular portion (64b) associated with the opposite ventilation outlet channel portion (61b) run away from one another, and that these angular portions (64a, 64b) delimit the supply opening (83) for supplying the gas and air flow from the ventilation chamber (57) to the ventilation outlet nozzle (61) in the lateral direction.

13. Stretching system according to any of claims 5 to 12, **characterised in that** the maximum supply opening (83) between the ventilation chamber (57) and the nozzle inlet opening (59) of the ventilation outlet channel (61) is formed by a perforated and/or slotted grid, which corresponds to that width range (B) or deviates preferably by less than 30%, in particular less than 25%, 20%, 15%, 10% or less than 5% from the width range (B) up to which the two ventilation outlet channel portions (61a, 61b) are adjustable.

14. Stretching system according to any of claims 5 to 13, **characterised in that**
a) the guide wall (77) or the guide plate (77) on the respective opposite outer sides of the ventilation outlet channel portions (61a, 61b) diverge away from the film plane (E) and merge into a support portion running parallel to the film plane (E), which support portion is supported on the end of the transport system channel (35), the transport system channel housing (35a) or the transport system shielding wall (35b) which is remote from the film plane (E), and/or
b) the guide wall (77) or the guide plate (77) is provided with at least one or a plurality of passage openings (81), in such a way that a gas or air backflow can flow from the side facing the film (F) through this at least one passage opening (81) on the side remote from the guide wall (77) or guide plate (77) into the return flow channel formed there.

15. Stretching system according to any of claims 5 to 14, **characterised in that** one or a plurality of fan arrangements are provided,
a) wherein at least one fan arrangement (75) is provided on the input side of the at least one ventilation chamber (57) or an intermediate chamber arranged upstream thereof, via which the gas or air flow to be supplied via the ventilation chamber (57) is transportable into the ventilation outlet channel (61), and/or
b) wherein at least one fan arrangement (75) is arranged at the outlet end of a gas or air flow return channel, via which the recirculated gas or air flow can be suctioned in and directly or indirectly blown into one of the at least one ventilation chambers (57) on the inlet side, and/or
c) wherein a heater (73) is provided in the circulating circuit for the gas or air flow, preferably upstream of the suction side of the fan device (75).

## Revendications

1. Module de ventilation, notamment pour système d'étirage d'un film plastique, présentant les particularités suivantes :
- il est prévu un canal de sortie de ventilation (61) doté d'un côté entrée de flux de gaz (61c) et d'un côté sortie de flux de gaz (61d) opposé à ce dernier,
- le canal de sortie de ventilation (61) est divisé, dans la direction longitudinale, entre son côté entrée de flux de gaz (61c) et son côté sortie de flux de gaz (61d) opposé à ce dernier, pour former au moins deux tronçons de canal de sortie de ventilation (61a, 61b), de telle façon que les au moins deux tronçons de canal de sortie de ventilation (61a, 61b) peuvent être éloignés et rapprochés l'un de l'autre transversalement par rapport à l'étendue longitudinale du canal de sortie de ventilation (61), permettant d'augmenter ou de réduire la largeur (B) du canal de sortie de ventilation (61) et ainsi la section d'écoulement.

2. Module de ventilation selon la revendication 1, **caractérisé en ce que** les deux tronçons de canal de sortie de ventilation (61a, 61b) se transforment en des tronçons coudés (64) du côté de leur ouverture d'entrée de buse (59) et/ou du côté détourné de leur ouverture de sortie de buse (62), le tronçon coudé (64a) associé au tronçon de canal de sortie de ventilation (61a) et le tronçon coudé (64b) associé au tronçon de canal de sortie de ventilation opposé (61b) s'étendant dans des sens opposés, et **en ce que** ces tronçons coudés (64a, 64b) délimitent, dans la direction latérale, l'ouverture d'alimentation (83) permettant d'apporter le flux de gaz et d'air depuis la chambre de ventilation (57) jusqu'au canal de sortie de ventilation (61).

3. Module de ventilation selon la revendication 1 ou 2, **caractérisé en ce que** les deux tronçons de canal de sortie de ventilation (61a, 61b) sont en appui, par l'intermédiaire d'au moins une paroi de guidage (77) ou plaque de guidage (77), sur des côtés extérieurs espacés l'un de l'autre.

4. Module de ventilation selon la revendication 3, **caractérisé en ce que**
a) la paroi de guidage (77) ou la plaque de guidage (77), sur les côtés extérieurs opposés respectifs des tronçons de canal de sortie de ventilation (61a, 61b), partent de l'ouverture de sortie de buse (62) dans des sens divergents et se transforment en un tronçon de support, ledit tronçon de support étant parallèle à un plan de film (E) lorsque le module de ventilation est disposé dans le système d'étirage, et ledit tronçon de support étant en appui sur l'extrémité - éloignée du plan de film (E) - du canal de système de transport (35), du bâti du canal de système de transport (35a) ou de la paroi de protection de système de transport (35b), et/ou
b) la paroi de guidage (77) ou la plaque de guidage (77) est dotée d'au moins une ou plusieurs ouvertures de passage (81), par lesquelles un flux de retour de gaz ou d'air peut s'écouler, depuis le côté tourné vers le film (F) du côté sortie de flux de gaz (61d), en passant par ladite au moins une ouverture de passage (81) sur le côté éloigné de la paroi ou de la plaque de guidage (77) jusqu'au canal de flux de retour qui y est formé, lorsque le module de ventilation est disposé dans le système d'étirage.

5. Système d'étirage pour étirer un film plastique, comprenant au moins un module de ventilation selon l'une des revendications précédentes, le système d'étirage présentant les particularités suivantes :
- il est prévu deux chemins d'amenée ou voies (2) circonférentiels, qui sont disposés selon une distance latérale l'un par rapport à l'autre,
- les chemins d'amenée ou voies (2) sont formés au moins en partie par des rails de transport et/ou de guidage (15),
- des pinces (K) sont déplaçables sur ces rails de transport et/ou de guidage (15) et peuvent être déplacées sur lesdits rails de transport et/ou de guidage (15) grâce à une partie transport (7), les pinces comportant une partie de pince (6) côté film et, eu égard au sens d'extraction (1) du film (F), les pinces (K) déplaçables sur le côté gauche saisissant le bord gauche (5) du film (F) traversant le système d'étirage et les pinces (K) déplaçables sur le côté droit saisissant le bord droit (5) dudit film et transportant le film (F) dans son plan (E) ainsi défini, à travers le système d'étirage,
- il est prévu, au-dessus du plan de film (E) et/ou au-dessous dudit plan de film (E), un module de ventilation supérieur comprenant une buse de ventilation supérieure (51) et/ou un module de ventilation inférieur comprenant une buse de ventilation inférieure (51'), lesdits au moins deux tronçons de canal de sortie de ventilation (61a, 61b) du module de ventilation pouvant être éloignés ou rapprochés l'un de l'autre transversalement au sens d'extraction (1) du film (F) et parallèlement au plan de film (E) ou au moins avec une composante parallèle au plan de film (E).

6. Système d'étirage selon la revendication 5, **caractérisé par** les particularités supplémentaires suivantes :
- la buse de ventilation supérieure et/ou inférieure (51, 51') comprend respectivement le canal de ventilation (61) divisé au moins en deux parties, de telle façon qu'un tronçon de canal de sortie de ventilation (61a) est associé aux pinces (K) présentes sur la gauche et au canal de système de transport (35) présent sur la gauche, vus dans le sens d'extraction (1), tandis que le deuxième tronçon de canal de sortie de ventilation opposé (61b) est associé, vu par rapport au sens d'extraction (1) du film (F), aux pinces (K) déplaçables sur la droite de celui-ci et au canal de système de transport (35) présent sur la droite de celui-ci, et
- les deux tronçons de canal de sortie de ventilation (61a, 61b) peuvent être rapprochés et éloignés directement ou indirectement l'un de l'autre par rapport à une chambre de ventilation (57) située à l'écart du film (F), et sont de préférence retenus, de préférence de manière déplaçable, par la chambre de ventilation (57) et/ou le canal de système de transport (35) qui y est associé.

7. Système d'étirage selon la revendication 5 ou 6, **caractérisé en ce que**
a) les deux tronçons de canal de sortie de ventilation (61a, 61b) orientés dans la direction du film (F) peuvent être éloignés ou rapprochés l'un de l'autre dans la même mesure que les deux rails de transport et/ou de guidage latéraux (15) appartenant au même tronçon d'étirage du système d'étirage peuvent être éloignés ou rapprochés l'un de l'autre, et/ou
b) les tronçons de canal de sortie de ventilation (61a, 61b) peuvent être éloignés ou rapprochés l'un de l'autre conjointement avec les deux rails de transport et/ou de guidage latéraux (15) et/ou conjointement avec les deux canaux de système de transport (35) latéraux, et/ou
c) la largeur du canal de sortie de ventilation (61) transversalement au sens d'extraction (1) du film (F) est de taille telle, ou peut être réglée à une taille telle, que la largeur (B) du canal de sortie de ventilation (61) correspond à l'écart minimal entre deux pinces (K) opposées ou en diffère de moins de 30 %, notamment de moins de 25 %, 20 %, 15 %, 10 % et notamment moins de 5 %.

8. Système d'étirage selon l'une des revendications 5 à 7, **caractérisé en ce que** les pinces (K) se composent d'une partie pince (6) et d'une partie transport (7) reliée à cette dernière par un pont (8), ladite partie transport (7) étant déplaçable sur les rails de transport et/ou de guidage (15), et **en ce qu'**une paroi de protection de système de transport (35b) présentant une hauteur (H) est prévue entre la partie pince (6) et la partie transport (7), et **en ce que** le canal de sortie de ventilation (61) fait saillie vers le plan de film (E) de telle façon que l'ouverture de buse de sortie de ventilation (62)
a) est plus proche du plan de film (E) que l'extrémité de la paroi de protection de système de transport (35b) qui est éloignée du plan de film (E) et/ou
b) est à un faible écart du plan de film (E), de telle façon que l'ouverture de buse de sortie de ventilation (62c) est située à un moindre écart (X) du plan de film (E) que l'écart (XX) existant entre un point d'une partie pince (6) le plus éloigné du plan de film (E) et/ou un levier de pince (25c) associé et le plan de film (E).

9. Système d'étirage selon l'une des revendications 5 à 8, **caractérisé en ce que** le canal de sortie de ventilation (61) faisant saillie vers le film (F) part, par ses deux tronçons de canal de sortie de ventilation (61a, 61b), d'une chambre de ventilation (57) qui est plus éloignée, par rapport au plan de film (E), que l'extrémité éloignée de la paroi de protection de système de transport (35b).

10. Système d'étirage selon l'une des revendications 5 à 9, **caractérisé en ce que** la paroi de protection de système de transport (35b) fait partie d'un canal de système de transport (35) et/ou d'un bâti de canal de système de transport (35a).

11. Système d'étirage selon l'une des revendications 5 à 10, **caractérisé en ce que**
a) il est prévu un chemin de retour de flux de gaz formé d'une part entre deux pinces (K) respectives adjacentes dans le sens d'extraction (1) et par le biais d'un espace d'écartement (43) présent entre un canal de système de transport (35) ou bâti de canal de système de transport (35a) se terminant à distance du plan de film (E) d'une part et une paroi de délimitation - encore plus éloignée - d'une chambre de ventilation (57), et/ou
b) le chemin de retour de flux de gaz destiné au flux de gaz ou d'air est réalisé grâce à des canaux d'aspiration de retour (69) allant jusqu'à une chambre d'aspiration de retour (71), lesdits canaux d'aspiration de retour (69) étant formés par des canaux traversant une chambre de ventilation (57) pour l'apport d'un flux d'air ou de gaz.

12. Système d'étirage selon l'une des revendications 5 à 11, **caractérisé en ce que** les deux tronçons de canal de sortie de ventilation (61a, 61b), du côté opposé au plan de film (E), se transforment en des tronçons coudés (64) parallèles au plan de film (E), le tronçon coudé (64a) associé au tronçon de canal de sortie de ventilation (61a) et le tronçon coudé (64b) associé au tronçon de canal de sortie de ventilation opposé (61b) s'étendant dans des sens opposés, et **en ce que** ces tronçons coudés (64a, 64b) délimitent, dans la direction latérale, l'ouverture d'alimentation (83) permettant d'apporter le flux de gaz et d'air depuis la chambre de ventilation (57) jusqu'au canal de sortie de ventilation (61).

13. Système d'étirage selon l'une des revendications 5 à 12, **caractérisé en ce que** l'ouverture d'alimentation (83) maximale entre la chambre de ventilation (57) et l'ouverture d'entrée de buse (59) du canal de sortie de ventilation (61) est formée par une grille de trous et/ou de fentes correspondant à ladite plage de largeur (B) ou différant de préférence de moins de 30 %, notamment de moins de 25 %, 20 %, 15 %, 10 % ou de moins de 5 % de ladite plage de largeur (B) jusqu' à laquelle les deux tronçons de canal de sortie de ventilation (61a, 61b) sont modifiables et/ou réglables.

14. Système d'étirage selon l'une des revendications 5 à 13, **caractérisé en ce que**
a) la paroi de guidage (77) ou la plaque de guidage (77) sur les côtés extérieurs opposés respectifs des tronçons de canal de sortie de ventilation (61a, 61b) partent du plan de film (E) dans des sens divergents et se transforment en un tronçon de support parallèle au plan de film (E) et qui est en appui sur l'extrémité - éloignée du plan de film (E) - du canal de système de transport (35), du bâti du canal de système de transport (35a) ou de la paroi de protection de système de transport (35b), et/ou
b) la paroi de guidage (77) ou la plaque de guidage (77) est dotée d'au moins une ou plusieurs ouvertures de passage (81) de façon à permettre l'écoulement d'un flux de retour de gaz ou d'air, depuis le côté tourné vers le film (F), en passant par ladite au moins une ouverture de passage (81) sur le côté éloigné de la paroi de guidage (77) ou de la plaque de guidage (77) jusqu'au canal de flux de retour qui y est formé.

15. Système d'étirage selon l'une des revendications 5 à 14, **caractérisé en ce qu'**il est prévu un ou plusieurs dispositifs ventilateurs, et dans lequel
a) du côté entrée de l'au moins une chambre de ventilation (57) ou d'une chambre intermédiaire en amont de celle-ci, il est prévu au moins un dispositif ventilateur (75) permettant le transport du flux de gaz ou d'air à apporter, par le biais de la chambre de ventilation (57), jusque dans le canal de sortie de ventilation (61), et/ou
b) au moins un dispositif ventilateur (75) est disposé à l'extrémité de sortie d'un canal de retour de flux de gaz ou d'air, permettant d'insuffler dans l'une des au moins une chambre de ventilation (57), par aspiration et directement ou indirectement côté entrée, et/ou
c) il est prévu un dispositif de chauffage (73) dans le circuit de circulation de flux de gaz ou d'air, de préférence en amont du côté aspiration du dispositif ventilateur (75).
